(19) Europäisches Patentamt / European Patent Office / Office européen des brevets

(11) **EP 4 145 666 A1**

(12) **EUROPEAN PATENT APPLICATION**
published in accordance with Art. 153(4) EPC

(43) Date of publication:
**08.03.2023  Bulletin 2023/10**

(21) Application number: **21817899.4**

(22) Date of filing: **03.06.2021**

(51) International Patent Classification (IPC):
**H02J 7/00** (2006.01)

(52) Cooperative Patent Classification (CPC):
**H01M 10/42; H02J 7/00; H04M 1/725;** Y02E 60/10

(86) International application number:
**PCT/CN2021/098166**

(87) International publication number:
**WO 2021/244613 (09.12.2021 Gazette 2021/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.06.2020  CN 202010507697**

(71) Applicant: **HUAWEI TECHNOLOGIES CO., LTD.
Shenzhen, Guangdong 518129 (CN)**

(72) Inventors:
• **TANG, Zhaohui**
 **Shenzhen, Guangdong 518129 (CN)**
• **LU, Xinxian**
 **Shenzhen, Guangdong 518129 (CN)**
• **MIAO, Lei**
 **Shenzhen, Guangdong 518129 (CN)**
• **WANG, Wenli**
 **Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **CHARGING MANAGEMENT METHOD, ELECTRONIC DEVICE AND SYSTEM**

(57)    This application discloses a charging management method, applied to an electronic device, and including: In a charging process, the electronic device determines charging behavior information, determines a charging control policy based on the charging behavior information, and performs charging according to the charging control policy. Therefore, in the charging process, the electronic device may more accurately control charging of the electronic device based on the determined charging behavior information. This prevents the electronic device from being in a float-charging state for a long time due to a user's failure to timely unplug the electronic device, so that a service life and performance of a battery are improved. In addition, the electronic device can be timely charged to target power, so that a use requirement of the user is met when the electronic device is unplugged for use, and user experience is improved.

FIG. 3

## Description

This application claims priority to Chinese Patent Application No. 202010507697.7, filed with the China National Intellectual Property Administration on June 5, 2020 and entitled "CHARGING MANAGEMENT METHOD, ELECTRONIC DEVICE, AND SYSTEM", which is incorporated herein by reference in its entirety.

## TECHNICAL FIELD

This application relates to the field of charging technologies, and in particular, to a charging management method, an electronic device, and a system.

## BACKGROUND

Currently, battery charging is becoming increasingly important for electronic devices such as a mobile phone or a tablet computer. In a charging process, a battery is not always in a charging state, but is in a float-charging state after being fully charged. Especially during fast charging, the battery quickly reaches a fully charged state. If a user fails to timely unplug the electronic device, the battery is in the float-charging state for a longer time. This brings the battery great damage, like being prone to adverse experiences and consequences of capacity attenuation, swelling, and expansion. Therefore, a charging process of the battery needs to be managed, to reduce float charging duration of the battery and meet a user requirement that the electronic device is fully charged when unplugged for use.

## SUMMARY

This application provides a charging management method, an electronic device, and a system. When the electronic device is charged, the electronic device may determine charging behavior information, and determine a charging control policy based on the charging behavior information to perform charging. Therefore, a service life and performance of a battery can be improved, and user experience can be improved.

To resolve the foregoing technical problem, according to a first aspect, an implementation of this application provides a charging management method, applied to an electronic device, and including: The electronic device starts charging. The electronic device determines charging behavior information. The electronic device determines a charging control policy based on the charging behavior information. The electronic device is charged according to the charging control policy. To be specific, in a charging process, the electronic device may control charging of the electronic device based on the determined charging behavior information. This prevents the electronic device from being in a float-charging state for a long time due to a user's failure to timely unplug the electronic device, so that a service life and performance of a battery are improved. In addition, the electronic device can be timely charged to target power, so that a use requirement of the user is met when the electronic device is unplugged for use, and user experience is improved.

In a possible implementation of the first aspect, the charging behavior information is determined by the electronic device based on charging behavior prediction information from the electronic device and charging behavior prediction information from another electronic device other than the electronic device. To be specific, based on the charging behavior prediction information from the electronic device and the charging behavior prediction information from another electronic device, the electronic device may more accurately determine the charging behavior information according to a method combining a plurality of device data, and perform charging control based on the charging behavior information, thereby achieving an objective of accurately performing charging control.

In a possible implementation of the first aspect, charging behavior prediction information may alternatively include only charging behavior prediction information from the electronic device, so that the electronic device can determine the charging behavior information based on the charging behavior prediction information from the electronic device. Alternatively, charging behavior prediction information may include only charging behavior prediction information from another electronic device other than the electronic device, so that the electronic device may determine the charging behavior information based on information from the another electronic device, for example, interaction information between the electronic device and the another electronic device, and user information collected by the another electronic device.

In a possible implementation of the first aspect, the charging behavior information may alternatively be directly obtained by the electronic device from another electronic device.

In a possible implementation of the first aspect, another electronic device includes a wearable device and/or a smart home device. To be specific, the electronic device may predict the charging behavior information based on information from devices such as the wearable device or the smart home device, thereby achieving an objective of more accurately performing charging control.

In a possible implementation of the first aspect, charging behavior prediction information is real-time information and/or historical storage information in a current charging process. To be specific, the electronic device may determine the charging behavior information of the electronic device based on information in a plurality of time periods, so that the determined charging behavior information of the electronic device is more accurate, thereby achieving an objective of accurately performing charging control.

In a possible implementation of the first aspect, the charging behavior prediction information includes one or more of the following: sleep state information of a user; sleep time information of the user; exercise information of the user; vital sign information of the user; interaction status information between the electronic device and the another electronic device; charging information of the electronic device; sensor information of the electronic device; a charging date of the electronic device; a predetermined event on the electronic device; and a charging location of the electronic device. To be specific, the electronic device may determine the charging behavior information by combining a plurality of pieces of information, so that the determined charging behavior information can be more accurate, thereby achieving the objective of accurately performing charging control.

In a possible implementation of the first aspect, the charging information of the electronic device includes one or more of the following: initial charging time of the electronic device; initial state of charge of the electronic device; charging duration of the electronic device; and end state of charge of the electronic device.

In a possible implementation of the first aspect, the method further includes: obtaining charging behavior prediction information in any one of the following manners: obtaining the charging behavior prediction information in real time in the charging process; obtaining the charging behavior prediction information based on a preset obtaining period in the charging process; and obtaining the charging behavior prediction information when battery power of the electronic device reaches a preset power threshold.

In a possible implementation of the first aspect, the charging behavior information includes any one of the following: unplug time at which a power supply is removed from the electronic device; unplug time at which the power supply is removed from the electronic device and battery power at which the power supply is removed from the electronic device; control intervention start time and control end time of the electronic device; and control intervention start time, control end time, and unplug time of the electronic device.

In a possible implementation of the first aspect, that the electronic device determines a charging control policy based on the charging behavior information and performs charging according to the charging control policy includes: The electronic device determines control intervention start time and control end time based on the charging behavior information. The electronic device stops charging at the control intervention start time, and starts charging at the control end time.

In a possible implementation of the first aspect, the method further includes: The electronic device determines whether to perform charging control. If the electronic device determines to perform charging control, the electronic device performs charging according to the charging control policy; on the contrary, if the electronic device determines not to perform charging control, the electronic device does not perform charging according to the charging control policy. Therefore, the electronic device may determine, according to a requirement, whether to perform charging control.

In a possible implementation of the first aspect, if a preset charging control condition is met, the electronic device determines to perform charging control. The charging control condition includes one or more of the following: a power condition of the electronic device; a charging time condition of the electronic device; a charging location condition of the electronic device; a connection status condition between the electronic device and a power supply; a power condition of another electronic device that supplies power to the electronic device, and a user status condition. That is, different charging control conditions may be set, so that when determining whether to perform charging control, the electronic device may perform determining according to the charging control condition.

In a possible implementation of the first aspect, the electronic device determines, based on battery power of the electronic device and a user status, whether to perform charging control.

In a possible implementation of the first aspect, the electronic device obtains user status determining information, and determines a user status based on the user status determining information.

In a possible implementation of the first aspect, a user status includes a sleep state of a user, an exercise state of the user, a status of using another electronic device by the user, and the like.

In a possible implementation of the first aspect, the method further includes: The electronic device determines whether the battery power reaches a preset charging control threshold. If the battery power does not reach the preset charging control threshold, charging control is not performed; or if the battery power reaches the preset charging control threshold, the electronic device determines whether the user status is a preset control state. If the user status is the preset control state, charging control is performed; or if the user status is not the preset control state, charging control is not performed. To be specific, if the battery power of the electronic device reaches the preset charging control threshold, and the user status is the preset control state, it is considered that the preset charging control condition is met.

In a possible implementation of the first aspect, the preset control status includes that: the user is in a light sleep state; the user is in a deep sleep state; and sleep duration of the user reaches a preset sleep duration threshold.

In a possible implementation of the first aspect, a preset control status further includes that: the user is in an exercise state, the user uses another electronic device, or the like.

That is, the electronic device may determine a sleep state of a user for the electronic device. If the electronic device determines, based on the sleep state, that charging control needs to be performed, the electronic device determines the charging control policy based on the determined charging behavior information related to current charging of the electronic device. The electronic device performs charging control according to the charging control policy. Therefore, for example, charging control may be performed when the user is in the sleep state. This prevents the electronic device from being in the float-charging state for a long time due to the user's failure to timely unplug the electronic device, so that the service life and performance of the battery are improved. Charging control is not performed when the user is in a non-sleep state. Therefore, the electronic device can be timely charged to the target power, so that the use requirement of the user is met when the electronic device is unplugged for use, and user experience is improved.

In a possible implementation of the first aspect, user status determining information comes from the electronic device, and/or comes from another electronic device other than the electronic device. That is, the electronic device may determine a sleep state of the user based on the user status determining information obtained through a plurality of channels, so that the determined sleep state of the user is more accurate.

In a possible implementation of the first aspect, user status determining information and charging behavior prediction information may be partially the same. For example, the user status determining information includes sleep state information of the user, sleep time information of the user, exercise information of the user, vital sign information of the user, and interaction status information between the electronic device and another electronic device. In addition, the user status determining information and the charging behavior prediction information may be completely the same, and may be selected according to a requirement.

In a possible implementation of the first aspect, the method further includes: displaying a charging management enabling control on an interface of the electronic device. If the electronic device detects an enable operation performed by the user on the charging management enabling control, the electronic device obtains charging behavior prediction information during charging. If the electronic device detects a disable operation performed by the user on the charging management enabling control, the electronic device does not obtain charging behavior prediction information during charging.

The user may control, by using the charging management enabling control, whether the electronic device obtains the charging behavior prediction information according to a requirement, that is, set whether the electronic device performs charging control, to improve interaction experience between the user and the electronic device.

In a possible implementation of the first aspect, the method further includes: If the electronic device determines to perform charging control, the electronic device displays prompt information used to remind a user that charging control has been performed. In this way, the user can intuitively see whether the electronic device is currently performing charging control.

In a possible implementation of the first aspect, the method further includes: re-determining the charging behavior information; and if the re-determined charging behavior information is different from the previously determined charging behavior information, determining a new charging control policy, and performing charging control according to the new charging control policy. Therefore, the charging control policy may be adjusted based on an actual situation, to improve the service life and performance of the battery and improve user experience.

In a possible implementation of the first aspect, the re-determining the charging behavior information includes: re-determining the charging behavior information based on a preset determining period; or in a process of performing charging control, after charging control is interrupted, if it is determined, based on the user status, that charging control needs to be performed, re-determining the charging behavior information.

In a possible implementation of the first aspect, the method further includes: stopping re-determining the charging behavior information when the electronic device is unplugged or the battery power reaches a preset control stop threshold.

In a possible implementation of the first aspect, the method further includes: displaying, on the interface of the electronic device, prompt information of another electronic device that is selected by the user to interact with the electronic device. If the electronic device detects a trigger operation performed by the user on the prompt information, the electronic device displays device information including another electronic device capable of interacting with the electronic device. If the electronic device receives a trigger operation performed by the user on the device information of the another electronic device, the electronic device enables interaction with the another electronic device. That is, the user may select and set the another electronic device that interacts with the electronic device. Therefore, interaction experience between the user and the electronic device can be improved. Further, the determined charging control policy can better meet an expectation of the user.

According to a second aspect, an implementation of this application provides a charging management system, including a first electronic device and at least one second electronic device that establishes communication with the first electronic device. The first electronic device starts charging, the first electronic device is configured to obtain first charging behavior prediction information, and the second electronic device is configured to obtain second charging behavior prediction information, and send the second charging behavior prediction information to the first electronic device. The first electronic device is configured to determine charging behavior information based on the first charging behavior prediction information and the second charging behavior prediction information, determine a charging control policy based on the charging behavior information, and perform charging according to the charging control policy.

In a possible implementation of the second aspect, the first electronic device is further configured to: determine whether to perform charging control, and when the first electronic device determines to perform charging control, perform charging according to the charging control policy.

In a possible implementation of the second aspect, the second electronic device includes a wearable device and/or a smart home device.

In a possible implementation of the second aspect, the first electronic device and the second electronic device perform near-field communication or far-field communication.

The charging management system provided in this application includes an electronic device configured to perform the charging management method according to any one of the first aspect and/or the possible implementations of the first aspect. Therefore, advantageous effects (or advantages) of the charging management method provided in the first aspect can also be implemented.

According to a third aspect, an implementation of this application provides an electronic device, including: a memory, configured to store a computer program, where the computer program includes program instructions; and a processor, configured to execute the program instructions, so that the electronic device performs the foregoing charging management method.

In a possible implementation of the third aspect, the processor is configured to execute the program instructions, so that the electronic device performs the following charging management method: The electronic device starts charging. The electronic device obtains charging behavior prediction information, and predicts, based on the charging behavior prediction information, charging behavior information related to current charging of the electronic device. The electronic device determines a charging control policy based on the charging behavior information. The electronic device performs charging control according to the charging control policy.

According to a fourth aspect, an implementation of this application provides a computer-readable storage medium. The computer-readable storage medium stores a computer program, the computer program includes program instructions, and when the program instructions are run by a computer, so that the computer is enabled to perform the foregoing charging management method.

In a possible implementation of the fourth aspect, the program instructions are run by the computer, so that the computer is enabled to perform the following charging management method: The electronic device starts charging. The electronic device obtains charging behavior prediction information, and predicts, based on the charging behavior prediction information, charging behavior information related to current charging of the electronic device. The electronic device determines a charging control policy based on the charging behavior information. The electronic device performs charging control according to the charging control policy.

**BRIEF DESCRIPTION OF DRAWINGS**

To describe the technical solutions in this application more clearly, the following briefly describes the accompanying drawings required for describing embodiments.

FIG. 1 is a schematic diagram of a structure of a mobile phone according to some embodiments of this application;

FIG. 2 is a block diagram of a structure of a charging management system according to some embodiments of this application;

FIG. 3 is a flowchart of a charging management method according to some embodiments of this application;

FIG. 4 is a schematic diagram of a process in which a mobile phone obtains data from a band according to some embodiments of this application;

FIG. 5 is a flowchart of another charging management method according to some embodiments of this application;

FIG. 6 is a flowchart of another charging management method according to some embodiments of this application;

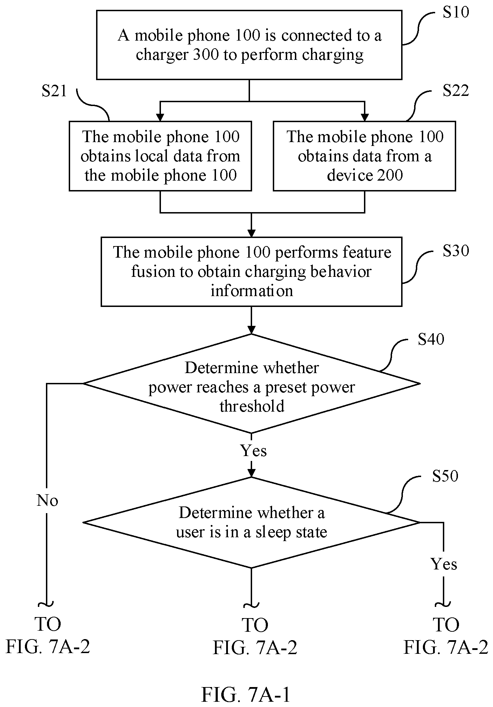

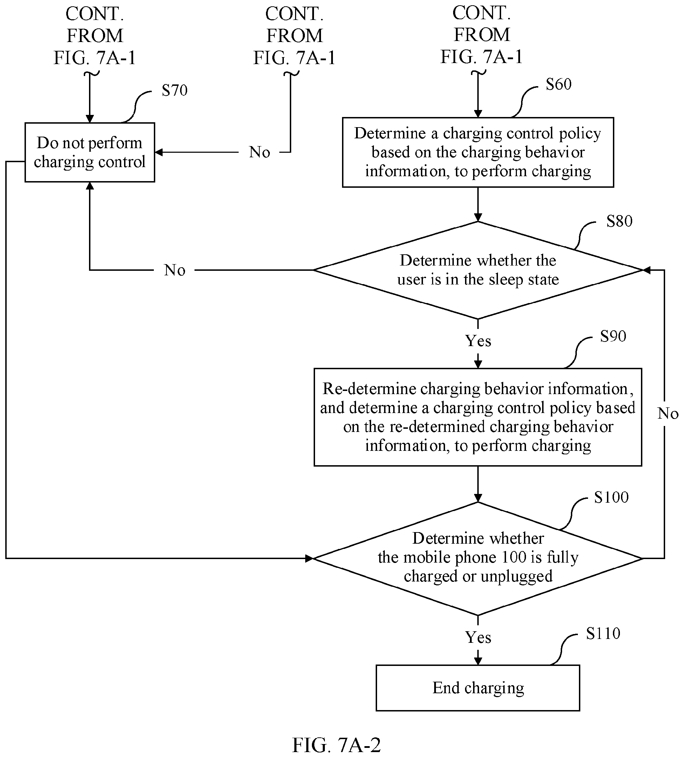

FIG. 7A-1 and FIG. 7A-2 are a flowchart of still another charging management method according to some embodiments of this application;

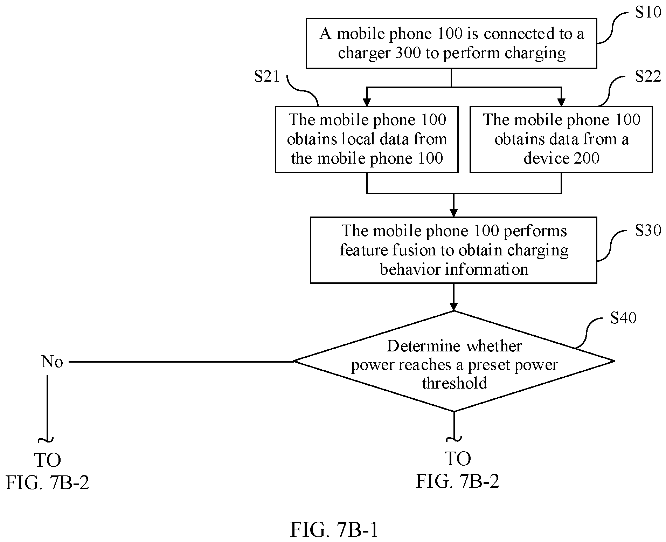

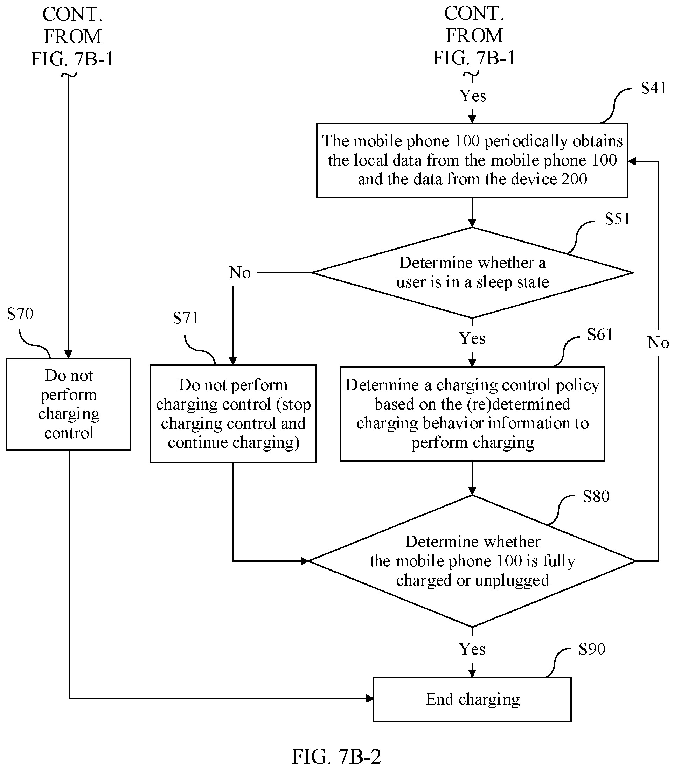

FIG. 7B-1 and FIG. 7B-2 are a flowchart of yet another charging management method according to some embodiments of this application;

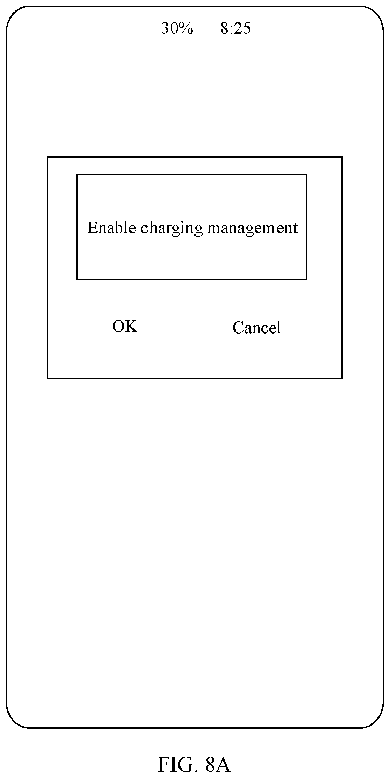

FIG. 8A to FIG. 8F are schematic diagrams of some interfaces of a mobile phone according to some embodiments of this application;

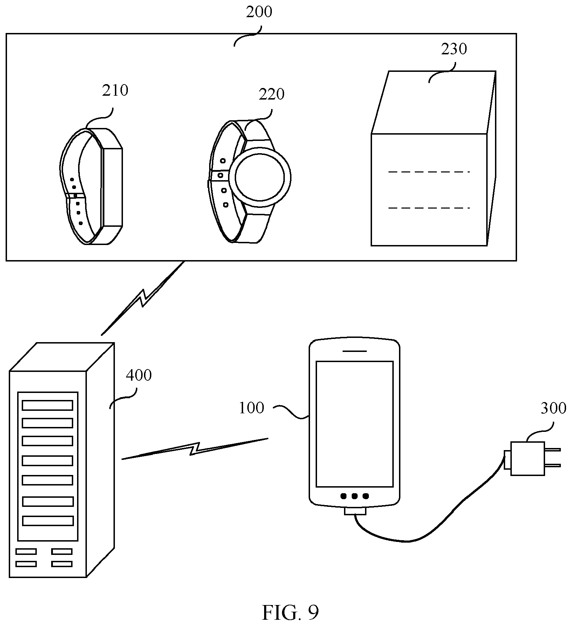

FIG. 9 is a block diagram of a structure of another charging management system according to some embodiments of this application; and

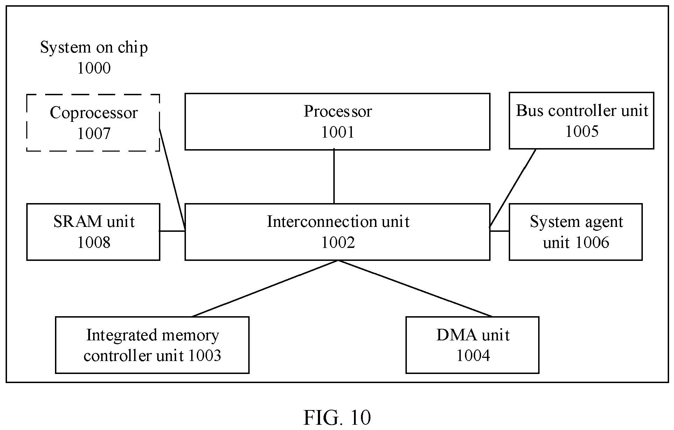

FIG. 10 is a schematic diagram of a structure of a system on chip (SoC) according to some embodiments of this application.

**DESCRIPTION OF EMBODIMENTS**

It should be noted that, in this specification, reference numerals and letters in the following accompanying drawings represent similar items. Therefore, once an item is defined in an accompanying drawing, the item does not need to be further defined or interpreted in subsequent accompanying drawings.

The following further describes in detail embodiments of this application with reference to the accompanying drawings.

When an electronic device is used, due to different use habits of individuals or different environments, plug time or unplug time of the electronic device during charging is different for different people. How to accurately determine (predict/estimate) charging behavior of a user, and then adopt an optimal charging control policy to ensure that float charging duration of the electronic device can be reduced, and when the user unplugs the electronic device, battery power of the electronic device can meet a use requirement of the user without affecting user experience is a current problem.

Based on the foregoing problem, this application provides a charging management method, to perform charging management on an electronic device during charging. In this application, the electronic device includes but is not limited to a mobile phone, a tablet computer, a TV, a notebook computer, an ultra-mobile personal computer (ultra-mobile personal computer, UMPC), a handheld computer, a netbook, a personal digital assistant (personal digital assistant, PDA), a wearable device, a virtual reality device, and the like.

It should be noted that, in this application, the electronic device is an electronic device that may perform wireless communication and/or wired communication with another electronic device. In addition, the electronic device has a battery, a charging circuit, and the like, and may be connected to a power supply by using a charger to perform charging. The electronic device may be connected to the charger for charging by using an electrical connection cable. In addition, the electronic device may alternatively be wirelessly charged in a wireless manner.

In this application, the electronic device may be a mobile phone, and the charging management method provided in this application may be applied to the mobile phone.

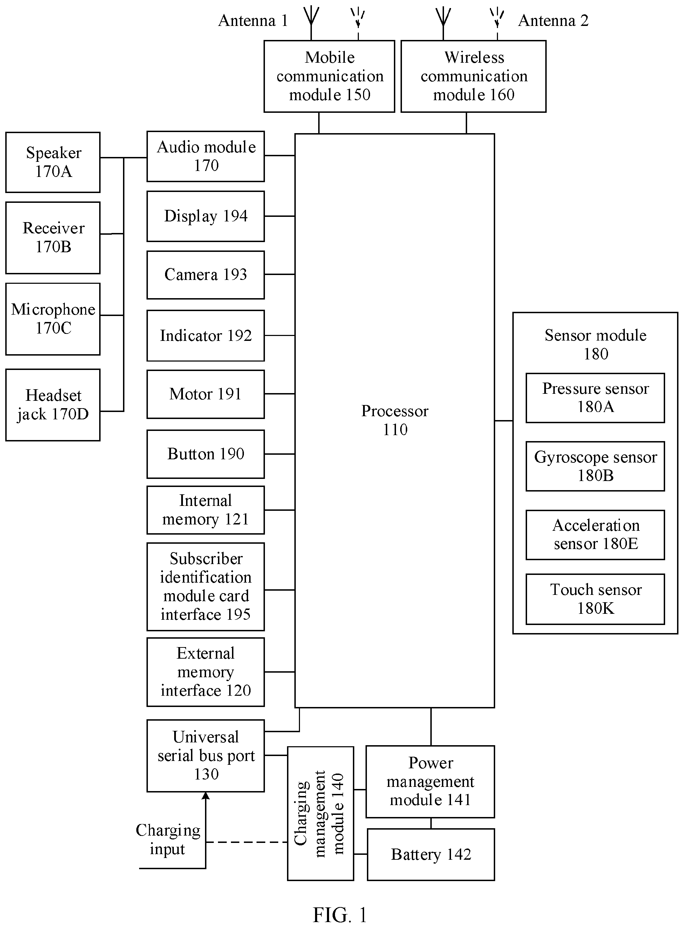

FIG. 1 is a schematic diagram of a structure of a mobile phone 100.

The mobile phone 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, an acceleration sensor 180E, a touch sensor 180K, and the like.

It may be understood that the structure shown in this application does not constitute a limitation on the mobile phone 100. In some other embodiments, the mobile phone 100 may include more or fewer components than those shown in the figure, or some components may be combined, or some components may be split, or the components may be disposed differently.

The processor 110 may include one or more processing units. For example, the processor 110 may include an application processor (application processor, AP), a modem processor, a graphics processing unit (graphics processing unit, GPU), an image signal processor (image signal processor, ISP), a controller, and the like. Different processing units may be independent components, or may be integrated into one or more processors. A memory may be further disposed in the processor 110, and is configured to store instructions and data. The processor 110 is configured to enable the mobile phone 100 to perform the provided charging management method.

The charging management module 140 is configured to receive a charging input from a charger. The charger may be a wireless charger or a wired charger. In some embodiments of wired charging, the charging management module 140 may receive a charging input from the wired charger through the USB port 130. In some embodiments of wireless charging, the charging management module 140 may receive a wireless charging input through a wireless charging coil of an electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery state of health (electric leakage or impedance). In some other embodiments, the power management module 141 may alternatively be disposed in the processor 110. In some other embodiments, the power management module 141 and the charging management module 140 may alternatively be disposed in a same component. In addition, the charging management module 140 may control charging of the battery 142 according to a control instruction that is sent by the processor 110 and forwarded by the power management module 141.

A wireless communication function of the mobile phone 100 may be implemented by using the antenna 1, the antenna 2, the mobile communication module 150, the wireless communication module 160, the modem processor, the baseband processor, and the like.

The mobile communication module 150 may provide a wireless communication function such as 2G/3G/4G/5G applied to the mobile phone 100.

The wireless communication module 160 may provide a wireless communication solution that includes a wireless local area network (wireless local area network, WLAN) (for example, a wireless fidelity (wireless fidelity, Wi-Fi) network) and Bluetooth (Bluetooth, BT) and that is applied to the mobile phone 100.

In some embodiments, the antenna 1 and the mobile communication module 150 of the mobile phone 100 are coupled, and the antenna 2 and the wireless communication module 160 are coupled, so that the mobile phone 100 can communicate with a network and another device by using a wireless communication technology.

The mobile phone 100 implements a display function by using the GPU, the display 194, and the like.

The pressure sensor 180A is configured to sense a pressure signal, and can convert the pressure signal into an electrical signal. In some embodiments, the pressure sensor 180A may be disposed on the display 194. When a touch operation is performed on the display 194, the mobile phone 100 detects the touch operation by using the pressure sensor 180A, to determine an operation of a user.

The gyroscope sensor 180B may be configured to determine a moving posture of the electronic device 100. In some embodiments, an angular velocity of the electronic device 100 around three axes (namely, axes x, y, and z) may be determined by using the gyroscope sensor 180B. The gyroscope sensor 180B may be configured to determine whether the user is using the mobile phone 100, and configured to determine whether a location of the mobile phone 100 vibrates. For example, when the mobile phone 100 is placed in a bed, the mobile phone 100 may detect whether the bed vibrates, to determine a sleep state of the user.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device. Similar to the gyroscope sensor 180B, the acceleration sensor 180E may also be configured to determine whether the user is using the mobile phone 100, and configured to determine a sleep state of the user, and the like.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor 180K may transfer the detected touch operation to the application processor to determine a touch event type. A visual output related to the touch operation may be provided by using the display 194. In some other embodiments, the touch sensor 180K may alternatively be disposed on a surface of the mobile phone 100, and is located on a position different from that of the display 194.

In this application, the mobile phone 100 is a smartphone. When the mobile phone 100 is charged, the mobile phone 100 may determine (predict/estimate), based on charging behavior prediction information obtained by the mobile phone 100 and an artificial intelligence (Artificial Intelligence, AI) technology, charging behavior information of the mobile phone 100 during current charging. Then, the mobile phone 100 determines a charging control policy based on the determined charging behavior information of the mobile phone 100, and performs charging control according to the determined charging control policy.

The AI technology includes but is not limited to an analysis and prediction method such as deep learning (Deep Learning, DL) and artificial neural network (Artificial Neural Network, ANN) in machine learning (Machine Learning, ML).

The charging management method provided in this application may be applied to a multi-device interaction scenario. In other words, the charging management method provided in this application may be a charging management method based on multi-device collaboration. The mobile phone 100 may obtain the charging behavior prediction information from the mobile phone 100 and another electronic device that communicates with the mobile phone 100, and determine the charging behavior information based on the charging behavior prediction information. To be specific, based on the charging behavior prediction information from the mobile phone 100 and the charging behavior prediction information from the another electronic device, the mobile phone 100 may determine more accurately the charging behavior information according to a method combining a plurality of device data, and perform charging control based on the charging behavior information, thereby achieving an objective of accurately performing charging control.

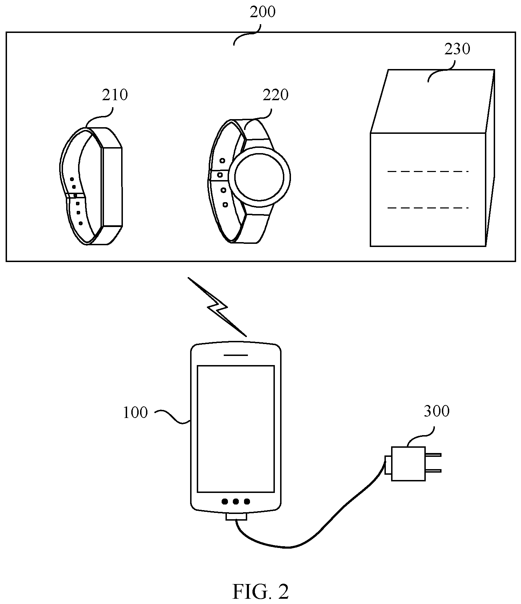

FIG. 2 is a block diagram of a structure of a charging management system.

The charging management system provided in this application includes a mobile phone 100 and a device 200. A wireless communication connection is established between the mobile phone 100 and the device 200 through a communication network. In addition, communication between the mobile phone 100 and the device 200 may be near-field communication, for example, Bluetooth or Wi-Fi, or may be far-field communication, for example, general packet radio service (general packet radio service, GPRS) or code division multiple access (Code Division Multiple Access, CDMA).

In addition, the charger 300 is connected to the power supply, the mobile phone 100 is connected to the charger 300 by using an electrical connection cable, and the charger 300 is configured to charge the mobile phone 100.

In this application, the device 200 includes but is not limited to a wearable device such as a band 210 and a watch 220, a smart speaker 230 that can be connected to the mobile phone 100, and another smart home device such as a smart camera or a smart large screen. In addition, the device 200 may also include another Internet of things (Internet of Things, IoT) device.

The following uses an example in which the device 200 includes the band 210, the watch 220, and the smart speaker 230, and the mobile phone 100 performs near-field communication with the band 210, the watch 220, and the smart speaker 230 for description.

The charging management method provided in this application may be applied to the charging management system.

In an implementation of the charging management method provided in this application, charging behavior prediction information used to determine charging behavior information may include information from the band 210, the watch 220, and the smart speaker 230, and information from the mobile phone 100. In addition, the charging behavior information may be unplug time of the mobile phone 100. To be specific, the mobile phone 100 may determine the unplug time of the mobile phone 100 based on the charging behavior prediction information, and determine a charging control policy based on the determined unplug time of the mobile phone 100.

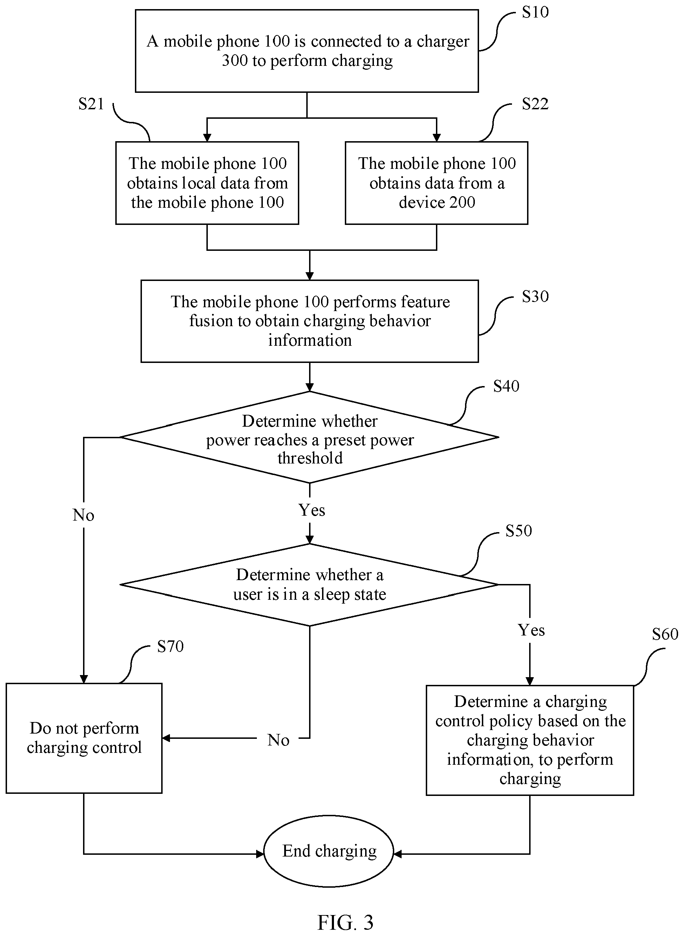

Refer to FIG. 3. In an implementation of this application, a charging management method provided in this application includes the following steps.

S10: The charger 300 is connected to the power supply. A mobile phone 100 is connected to the charger 300 to start charging.

S21: The mobile phone 100 obtains local data, that is, the mobile phone 100 obtains first charging behavior prediction information from the mobile phone 100.

The first charging behavior prediction information from the mobile phone 100 includes but is not limited to charging information (data) from the mobile phone 100 and sensor information (data).

The charging information may include real-time charging data of current charging and historical charging data stored in the mobile phone 100. The real-time charging data may include initial charging time, initial state of charge, and current charged duration of current charging. The historical charging data may include initial charging time, initial state of charge, charging duration, end state of charge, and the like of historical charging. The mobile phone 100 may determine unplug time of the mobile phone 100 based on the charging information.

For example, based on the initial charging time, the initial state of charge, and the current charged duration in the real-time charging data, the mobile phone 100 may determine that the mobile phone 100 needs to be charged for another hour before the mobile phone 100 is in a fully charged state. In this case, it is determined that the unplug time is one hour later. In addition, the mobile phone 100 may learn, based on the historical charging data, that unplug time of a user is usually 7:00 to 8:00, and then determine that the unplug time for the user is 7:00 to 8:00.

The sensor information may also include real-time sensor information of the mobile phone 100 during current charging and sensor information historically stored in the mobile phone 100.

In addition, the sensor information may include gyroscope output data, accelerometer output data, and the like. The mobile phone 100 may determine usage of the mobile phone 100 by the user based on the sensor information in the mobile phone 100, to determine the unplug time of the mobile phone 100.

For example, in a charging process, if a value of each of the gyroscope output data and the accelerometer output data is less than a preset threshold or is within a preset fluctuation range, it is considered that the mobile phone 100 is not used by the user. If a value of each of the gyroscope output data and the accelerometer output data is greater than or equal to a preset threshold or exceeds a preset fluctuation range, it is considered that the user starts to use the mobile phone. Because the user uses the mobile phone after unplugging it, the sensor information may be used to determine the unplug time for the user.

In addition, the gyroscope output data is angular velocity information, and the accelerometer output data is acceleration information.

S22: The mobile phone 100 obtains data from a device 200, that is, the mobile phone 100 obtains second charging behavior prediction information from the device 200.

The second charging behavior prediction information obtained by the mobile phone 100 may include sleep state information of the user, sleep time information of the user, vital sign information of the user, exercise information of the user, interaction status information between the mobile phone 100 and a smart speaker 230, and the like that are collected by a band 210 and a watch 220.

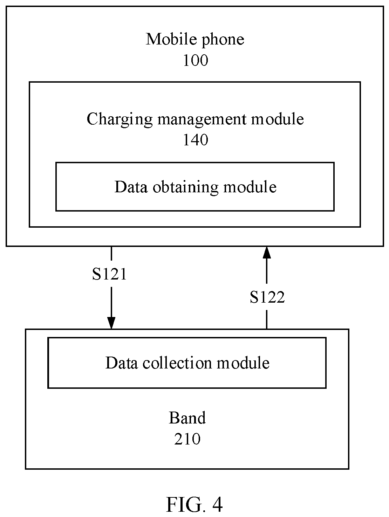

Refer to FIG. 4. The band 210 is used as an example for description. The band 210 has a data collection module. When the user wears the band 210 and the band 210 is in an enabled state, the data collection module collects information such as the vital sign information, exercise information, sleep state information, and sleep time information of the user in real time, and stores the collected information. If the band 210 establishes a wireless communication connection with the mobile phone 100 through a communication network, as shown in step S121, a charging management module 140 in the mobile phone 100 may invoke a data collection interface of the data collection module in the band 210 to obtain real-time information and historical storage information in the band 210; alternatively, as shown in step S 122, a data collection interface of the data collection module in the band 210 reports real-time information and historical storage information collected by the band 201 to the charging management module 140 in the mobile phone 100.

A data obtaining module may be disposed in the charging management module 140. The data obtaining module may include a far-end data obtaining module configured to obtain data in an electronic device that performs far-field communication with the mobile phone 100.

In addition, the data obtaining module may include a near-end data obtaining module configured to obtain data in an electronic device that performs near-field communication with the mobile phone 100.

For example, when the mobile phone 100 is connected to the power supply by using the charger 300, the data obtaining module interacts with the data collection module in the band 210, to collect the information collected by the data collection module in the band 210 and the historical storage data in the band 210 to the mobile phone 100.

The interaction status information between the mobile phone 100 and the smart speaker 230 may be a data communication rate between the mobile phone 100 and the smart speaker 230 stored in the smart speaker 230, or the like. Alternatively, a manner in which the mobile phone 100 obtains the interaction status information may be that the charging management module 140 in the mobile phone 100 invokes a data collection interface of a data collection module in the smart speaker 230 to obtain the interaction status information in the smart speaker 230.

The mobile phone 100 may determine a user status based on the second charging behavior prediction information, and may determine usage of the mobile phone 100 by the user based on the user status, to determine the unplug time of the mobile phone 100. The user status may be a sleep state of the user, an exercise state of the user, a status of using another electronic device by the user, or the like.

For example, the mobile phone 100 may determine the sleep state of the user based on the sleep state information of the user and the sleep time information of the user.

The sleep state information of the user may be that the user is in a sleep state or is in a non-sleep state, or may be that the user is in a deep sleep state, a light sleep state, or a non-sleep state.

The sleep time information of the user may be time at which the user enters the sleep state, for example, the time at which the user enters the sleep state is 23:00; alternatively, the sleep time information of the user may be duration in which the user is in the sleep state, for example, the duration in which the user is in the sleep state is 35 min.

Therefore, the mobile phone 100 can intuitively and directly determine the sleep state of the user based on the sleep state information and sleep time information of the user. The unplug time of the mobile phone 100 may be determined based on the sleep state of the user. For example, the mobile phone 100 may determine, based on the sleep state of the user, time at which the user changes from the sleep state to the non-sleep state. Because the user usually needs to use the mobile phone 100 when the user is in the non-sleep state, time of the user from the sleep state to the non-sleep state may be considered as the unplug time for the user.

The mobile phone 100 may determine the sleep state and exercise state of the user based on the vital sign information of the user.

The vital sign information of the user may be vital sign parameters such as a heart rate or blood oxygen of the user. Whether the user is in the sleep state may be determined based on the vital sign information of the user. For example, the heart rate of the user, a preset heart rate range when the user is in the sleep state, and a preset heart rate range when the user is in the non-sleep state may be compared, to determine the sleep state of the user. Alternatively, the heart rate of the user may be compared with a preset heart rate threshold. If the heart rate of the user is greater than or equal to the heart rate threshold, it is considered that the user is in the non-sleep state. If the heart rate of the user is less than the heart rate threshold, it is considered that the user is in the sleep state.

In addition, the heart rate threshold may be a different value selected based on a gender, an age, a health status, and the like of the user. In addition, the heart rate threshold may be specifically determined by performing big data analysis on heart rate big data of the user in a period of time, or may be obtained by performing big data analysis on medical data.

For example, the user is an adult female. If the heart rate of the user is 60-70 times/min, it may be considered that the user is in the sleep state; or if the heart rate of the user is 70-90 times/min, it may be considered that the user is in the non-sleep state. Further, if the heart rate of the user is 60-65 times/min, it may be considered that the user is in the deep sleep state; or if the heart rate of the user is 65-70 times/min, it may be considered that the user is in the light sleep state.

For example, the user is an adult male. If the heart rate of the user is 50-65 times/min, it may be considered that the user is in the sleep state; or if the heart rate of the user is 65-80 times/min, it may be considered that the user is in the non-sleep state. Further, if the heart rate of the user is 50-60 times/min, it may be considered that the user is in the deep sleep state; or if the heart rate of the user is 60-65 times/min, it may be considered that the user is in the light sleep state.

Determining the sleep state of the user based on other vital sign parameters such as the blood oxygen is similar to determining the sleep state of the user based on the heart rate. Details are not described in this application.

The mobile phone 100 may also determine the exercise state of the user based on the exercise information of the user.

The exercise information of the user may be parameters such as an exercise time period and a quantity of exercise steps of the user. Based on the exercise information of the user, whether the user is in the exercise state, and the exercise time period may also be determined. In this case, it may be considered that the user does not use the mobile phone 100 in the exercise time period. Therefore, the unplug time of the mobile phone 100 may be determined based on exercise end time.

In addition, whether the user is in the sleep state may also be determined based on the exercise information of the user. For example, if the exercise time period of the user is before 22:00, and the quantity of exercise steps of the user is 0 after 22:00, it is considered that the user may already be in the sleep state after 22:00. Therefore, whether the user is in the sleep state may be determined.

The mobile phone 100 may also determine the user status and a status of using the device 200 by the user based on interaction status information between the mobile phone 100 and the device 200.

For example, the mobile phone 100 may also determine the sleep state of the user based on the interaction status information between the mobile phone 100 and the device 200.

Usually, if the mobile phone 100 interacts with another electronic device or interaction frequency is relatively high, it is considered that the mobile phone 100 or the another electronic device is being used by the user. Therefore, the user is not in the sleep state. If the mobile phone 100 no longer interacts with the another electronic device or the interaction frequency is reduced, it is considered that the mobile phone 100 or the another electronic device is not used by the user. Therefore, the user is in the sleep state.

The interaction status information may be interaction data between the mobile phone 100 and the another electronic device, for example, may be communication connection information such as connection time, connection duration, and a data communication rate. For example, if the data communication rate is relatively high, it is considered that the mobile phone 100 interacts with the another electronic device or the interaction frequency is relatively high; or if the data communication rate is relatively low, it is considered that the mobile phone 100 interacts with the another electronic device or the interaction frequency is relatively low.

For example, the mobile phone 100 is wirelessly connected to the smart speaker 230 in a short distance, and the mobile phone 100 plays music by using the smart speaker 230. The interaction status information may also be a data communication rate between the mobile phone 100 and the smart speaker 230. If the data communication rate between the mobile phone 100 and the smart speaker 230 is relatively high in a time period from 22:00 to 23:00, it is considered that the user is still listening to music by using the smart speaker 230, and the user is still in the non-sleep state. If the data communication rate between the mobile phone 100 and the smart speaker 230 is relatively low after 23:00, it is considered that the user does not use the smart speaker 230 to listen to music, and the user may be in the sleep state.

Similarly, the mobile phone 100 may determine the sleep state of the user based on interaction status information between the mobile phone 100 and the band 210 and between the mobile phone 100 and the watch 220. Details are not described herein again.

In this application, the second charging behavior prediction information may include real-time information in a current charging process and the historical storage information.

The second charging behavior prediction information may be real-time information generated after the mobile phone 100 is connected to the power supply by using the charger 300 to perform charging. A status of the user may be determined based on the real-time information in the current charging process.

In addition, in a process of using the mobile phone 100, historical information that is stored in the device 200 before current charging and that includes the vital sign information of the user, the exercise information of the user, the sleep state information of the user, the sleep time information of the user, and the interaction status information between the mobile phone 100 and the device 200 may be used by the mobile phone 100 to determine the user status. Therefore, the second charging behavior prediction information includes historical storage information. To be specific, the mobile phone 100 may further obtain the foregoing historical storage information stored in the device 200, and determines the user status based on the historical storage information.

The mobile phone 100 determines the user status based on the real-time information in the current charging process and the historical storage information. A historical status of the user at a current moment may be obtained based on the historical stored information. Therefore, the historical storage information may be used to determine the current status of the user, and then determine the user status with reference to the real-time information, so that the obtained user status can be more accurate.

In this application, that the mobile phone 100 obtains the second charging behavior prediction information may be that the mobile phone 100 obtains the second charging behavior prediction information in real time in a charging process after the mobile phone 100 is connected to the power supply by using the charger 300 to perform charging.

Also, the mobile phone 100 may obtain the second charging behavior prediction information based on a preset obtaining period in a charging process. A value of the obtaining period may range from 5 min to 10 min, for example, 5 min, 8 min, or 10 min. The obtaining period may alternatively be another value that may be selected according to a requirement.

In addition, the mobile phone 100 may obtain the second charging behavior prediction information when a state of charge of the battery of the mobile phone 100 reaches a preset power threshold. A value of the power threshold may range from 70% to 90%, for example, may be 70%, 75%, 80%, or 90%. Certainly, the power threshold may alternatively be another value that may be selected according to a requirement.

It should be noted that, because charge capacities (usually in a unit of mAh) of different batteries are different, battery power is defined in a form of a percentage in this application. For example, if a charge capacity of a battery is C, in this application, the battery power is described as 70% to represent 70%C and the battery power is described as 90% to represent 90%C.

S30: The mobile phone 100 performs feature fusion on the first charging behavior prediction information and the second charging behavior prediction information, to obtain charging behavior information.

The charging behavior prediction information includes real-time and historical vital sign information, exercise information, sleep state information, and sleep time information of the user, the interaction status information between the mobile phone 100 and the device 200, charging information of the mobile phone 100, sensor information of the mobile phone 100, and the like that are obtained by the mobile phone 100.

In this implementation, the mobile phone 100 performs information/data feature extraction and feature fusion processing based on each piece of charging behavior prediction information/data used to determine the charging behavior information of the mobile phone 100, extracts a fusion feature of the data (namely, feature information obtained by integrating each piece of charging behavior prediction information/data used to determine the charging behavior information of the mobile phone 100), and then inputs the fusion feature to a charging behavior information prediction model used to determine unplug time, to finally obtain the determined unplug time based on the fusion feature. To be specific, based on charging behavior data of a single device of the mobile phone 100, charging behavior information of the user may be more accurately determined in combination with other data such as interaction data between the mobile phone 100 and a plurality of other devices, and charging is controlled based on the determined charging behavior information of the user, to achieve an objective of accurately performing charging control.

The charging behavior information prediction model may be a neural network forecasting model. In this case, that the mobile phone 100 obtains the neural network forecasting model includes that the mobile phone 100 first performs feature extraction on the historical charging behavior prediction information. For example:

Feature information such as vital sign information and exercise information obtained by the mobile phone 100 from the device 200 may be represented as a one-dimensional eigenvector.

$$R = [a, b, c]$$

In the formula, a indicates a heart rate, b indicates blood oxygen, and c indicates a quantity of exercise steps of the user within a specific time period (for example, one hour before the mobile phone 100 obtains data from the another electronic device).

An interaction data feature of the mobile phone 100 and the device 200 may be represented as a one-dimensional eigenvector.

$$I = [d]$$

In the formula, d indicates a quantity of times of interaction between the mobile phone 100 and the another electronic device within a specific time period.

A charging data feature of the mobile phone 100 may be represented as a one-dimensional eigenvector:

$$C = [e, f, g, h]$$

In the formula, e indicates initial charging time, f indicates an initial state of charge, g indicates a quantity of current charging times, and h indicates a charger model.

Further, the mobile phone 100 performs feature fusion on the one-dimensional eigenvector obtained by performing the feature extraction. A fusion manner may be connecting (splicing) the foregoing several one-dimensional eigenvectors, to form a new one-dimensional eigenvector (fusion feature).

$$V = [a, b, c, d, e, f, g, h]$$

Further, the mobile phone 100 may obtain, based on a plurality of charging records, a combination formed by a plurality of one-dimensional eigenvectors V, and charging behavior information (for example, charging duration) corresponding to the plurality of charging records to form a training set. A neural network model may be trained based on the training set, and the neural network model may be used as a neural network forecasting model to determine the charging behavior information.

In a current charging process, the mobile phone 100 obtains the foregoing charging behavior prediction information/data used to determine the charging behavior information of the mobile phone 100. Further, the mobile phone 100 performs information/data feature extraction on the charging behavior prediction information/data used to determine the charging behavior information of the mobile phone 100. For example:

Feature information such as vital sign information and exercise information obtained by the mobile phone 100 from the device 200 may be represented as a one-dimensional eigenvector.

$$R_{current} = [a, b, c]$$

In the formula, a indicates a heart rate, b indicates blood oxygen, and c indicates a quantity of exercise steps in the last hour.

An interaction data feature of the mobile phone 100 and the device 200 may be represented as a one-dimensional eigenvector.

$$I_{\text{current}} = [d]$$

d indicates a quantity of interactions between the mobile phone 100 and the another electronic device in the last hour.

A charging data feature of the mobile phone 100 may be represented as a one-dimensional eigenvector:

$$C_{\text{current}} = [e, f, g, h]$$

In the formula, e indicates initial charging time, f indicates an initial state of charge, g indicates a quantity of current charging times, and h indicates a charger model.

Further, the mobile phone 100 performs feature fusion on the one-dimensional eigenvector obtained by performing the feature extraction. A fusion manner may be connecting (splicing) the foregoing several one-dimensional eigenvectors, to form a new one-dimensional eigenvector (fusion feature).

$$V_{\text{current}} = [a, b, c, d, e, f, g, h]$$

Then, the mobile phone 100 inputs the fusion feature $V_{\text{current}}$ obtained this time into the foregoing obtained neural network forecasting model, to obtain the determined charging behavior information of current charging, that is, obtain the determined unplug time.

S40: The mobile phone 100 determines whether current power of the mobile phone 100 reaches a preset power threshold. If the current power reaches the preset power threshold, S50 is performed; or if the current power does not reach the preset power threshold, S70 is performed.

In this application, after battery power of the mobile phone 100 reaches the preset power threshold, the mobile phone 100 may determine the sleep state of the user, and further determine, based on the sleep state of the user, whether charging control needs to be performed.

The power threshold may be a control threshold, and a value of the power threshold may range from 70% to 90% described above, for example, may be 70%, 75%, 80%, or 90%. Certainly, the power threshold may alternatively be another value, and may be selected according to a requirement.

In this application, the mobile phone 100 may detect, in real time or based on a preset power detection period, a voltage between a positive electrode and a negative electrode of the battery in the mobile phone 100, to determine the battery power of the mobile phone 100, and further determine whether the battery power of the mobile phone 100 reaches the power threshold.

For example, when the mobile phone 100 is connected to the power supply by using the charger 300 to perform charging, the mobile phone 100 detects the battery power of the mobile phone 100 in real time. If the battery power of the mobile phone 100 reaches 80% (the power threshold is 80%), the mobile phone 100 determines whether the user is in the sleep state.

In addition, a value of the preset power detection period may range from 10 min to 20 min, for example, may be 10 min, 15 min, or 20 min, and another value may alternatively be selected according to a requirement.

S50: The mobile phone 100 determines whether the user is in the sleep state. If the user is in the sleep state, S60 is performed; or if the user is not in the sleep state, S70 is performed.

In this implementation, determining, based on the sleep state of the user, whether to perform charging control includes: if the mobile phone 100 determines that the sleep state of the user is that the user is in the sleep state, performing charging control; or if the mobile phone 100 determines that the sleep state of the user is that the user is in the non-sleep state, skipping charging control. Whether charging control needs to be performed is determined based on the sleep state of the user. For example, charging control may be performed when the user is in the sleep state. This can avoid a case in which the mobile phone 100 is quickly charged to the target power and is in a float-charging state for a long time because the user is in the sleep state and cannot timely unplug the mobile phone. Therefore, harm caused by being in the float-charging state for a long time can be avoided, and a service life and performance of the battery are improved. In addition, for example, charging control may not be performed when the user is in the non-sleep state. Therefore, the mobile phone 100 can be timely charged to target power, so that the battery power of the mobile phone 100 can meet a use requirement of the user when the mobile phone 100 is unplugged for use. Therefore, user experience is improved.

The mobile phone 100 is charged to the target power. The target power may be power when the battery of the mobile phone 100 is fully charged, or may be most appropriate state of charge determined based on performance and a lifespan of the battery of the mobile phone 100.

The mobile phone 100 may determine whether the user is in the sleep state based on one or more of the foregoing: the sleep state information of the user, the time information of the user, the vital sign information of the user, and the exercise information of the user. Details are not described herein again.

S60: The mobile phone 100 determines a charging control policy based on the determined charging behavior information, to perform charging.

If the determined unplug time is T3, current time is T1, current power is power threshold E1, and power of a fully charged battery is E2, power that further needs to be obtained by charging is E0 = E2 - E1. In this case, it may be determined, based on a charging rate and the power E0 that further needs to be obtained by charging, that time required for full charging is T0, and it may be determined that control start time may be T1 and control end time is T2 = T3 - T0. The determined charging control policy may be stopping charging at a moment T1, resuming charging at a moment T2, and performing charging based on the foregoing charging rate until the battery is fully charged.

It should be noted that a charging process may be non-linear. Therefore, the charging rate may not be a constant value, and the charging rate may become smaller as the charging time increases, so that the battery can be better protected.

In addition, in another implementation of this application, if the determined unplug time is T3, current time is T1, current power is power threshold E1, and power of a fully charged battery is E2, power that further needs to be obtained by charging is E0 = E2 - E1 and duration in which the mobile phone 100 and the charger 300 are in a connected state is T2 = T3 - T1. In this case, a charging rate V0 may be re-determined. The determined charging control policy may be subsequently continuously charging the mobile phone 100 based on V0 until the mobile phone 100 is fully charged.

It should be noted that the charging process may be non-linear. Therefore, the charging rate V0 may not be a constant value, and the charging rate V0 may become smaller as charging time increases, so that the battery can be better protected.

In this application, the determined charging behavior information may further include the determined unplug time of the mobile phone 100 and the determined power of the mobile phone 100 when unplugged. The power may be 40%, or may be another power.

In an implementation of this application, if current power is power threshold E1 and the determined power when unplugged is E2, power that further needs to be obtained by charging is E0 = E2 - E1. In this case, it may be determined, based on a charging rate and the power E0 that further needs to be obtained by charging, that power of a fully charged battery is E2, and required time is T0. If current time is T1 and the determined unplug time is T3, control start time may be T1 and control end time is T2 = T3 - T0. The determined charging control policy may be stopping charging at a moment T1, resuming charging at a moment T2, and charging the mobile phone 100 based on the charging rate until the battery power of the mobile phone 100 is E2. Further, as described above, the charging rate may not be a constant value.

For example, the current time is 3:00, control intervention start time is 3:00, control end time is 6:30, and the determined unplug time for the user is 7:00. In this case, the mobile phone 100 stops charging at 3:00, resumes charging at 6:30, and charges until 7:00. It can be learned that common unplug time for the user is 7:00. Therefore, time in which the mobile phone 100 is in the float-charging state can be reduced, the battery is protected, and battery power can also meet a use requirement of the user after the mobile phone 100 is unplugged at 7:00.

In addition, in another implementation of this application, if current power is power threshold E1 and the determined power when unplugged is E2, power that further needs to be obtained by charging is E0 = E2 - E1. If control intervention start time is current time T1 and the determined unplug time is T3, duration in which the mobile phone 100 and the charger 300 are in a connected state is T2 = T3 - T0. In this case, a charging rate V0 may be determined. The determined control policy may be that the mobile phone 100 is subsequently charged based on V0 until the battery power of the mobile phone 100 is E2. Further, as described above, the charging rate V0 may not be a constant value.

Further, in another implementation of this application, the charging behavior information may include control intervention start time and control end time of the mobile phone 100. Determining the charging control policy and performing charging control based on the charging control policy includes: stopping charging at the control intervention start time, starting charging at the control end time, and performing charging based on a charging rate before the control starts; or re-determining a charging rate based on the control intervention start time and the control end time, and performing charging based on the re-determined charging rate. Details are not described herein again.

S70: The mobile phone 100 does not perform charging control.

In this application, whether charging control needs to be performed is determined based on the sleep state of the user. For example, charging control may be performed when the user is in the sleep state. This can avoid a case in which the mobile phone 100 is quickly charged to the target power and is in a float-charging state for a long time because the user is in the sleep state and cannot timely unplug the mobile phone. Therefore, harm caused by being in the float-charging state for a long time can be avoided, and a service life and performance of the battery are improved. In addition, for example, charging control may not be performed when the user is in the non-sleep state. Therefore, the mobile phone 100 can be timely charged to target power, so that the battery power of the mobile phone 100 can meet a use requirement of the user when the mobile phone 100 is unplugged for use. Therefore, user experience is improved.

In another implementation of this application, the charging behavior prediction information used to determine the unplug time of the mobile phone 100 may further include information such as a charging date of the mobile phone 100 stored in the mobile phone 100, a predetermined event (for example, a schedule and an alarm) set by the user in the mobile phone 100, and a location (namely, a charging location) at which the user connects the mobile phone to the power supply during charging.

For example, the user sets an alarm clock to be 6:30 a.m. In this case, it may be determined that the unplug time for the user may be 6:30. If the user charges at home, it may be determined that the unplug time for the user is 7:00; or if the user charges at a company, the determined unplug time may be 12:00, or the like.

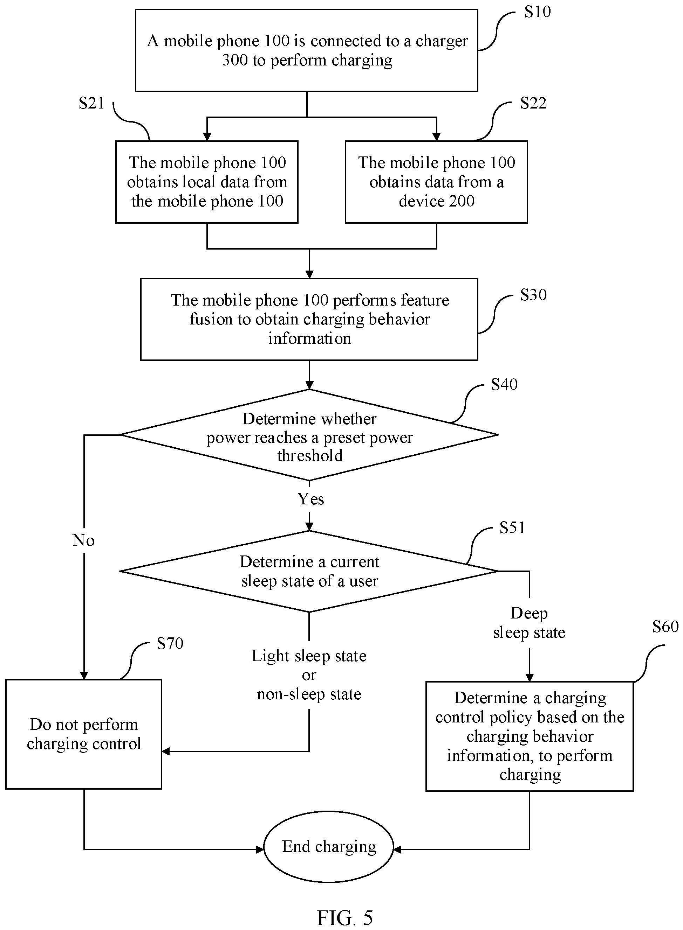

FIG. 5 provides a charging management method. S50 in the charging management method shown in FIG. 4 may be S51 in the method shown in FIG. 5, that is, the mobile phone 100 determines a current sleep state of the user. If the sleep state is the deep sleep state, S60 is performed; or if the sleep state is the light sleep state or the non-sleep state, S70 is performed.

Other steps are the same as those in the charging management method shown in FIG. 4. Details are not described herein again.

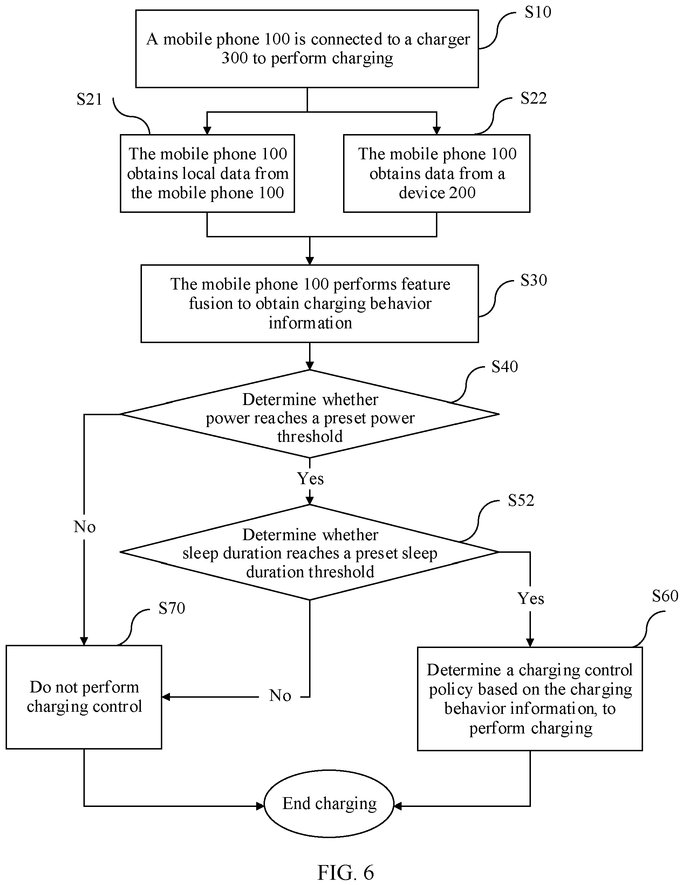

FIG. 6 provides a charging management method. S50 in the charging management method shown in FIG. 4 may be S52 in the method shown in FIG. 6, that is, the mobile phone 100 determines whether current sleep duration of the user is greater than a preset sleep duration threshold. If the sleep duration of the user reaches the preset sleep duration threshold, S60 is performed; or if the sleep duration of the user does not reach the preset sleep duration threshold, S70 is performed.

Other steps are the same as those in the charging management method shown in FIG. 4. Details are not described herein again.

It should be noted that a value of the preset sleep duration threshold may range from 20 min to 40 min, for example, may be 20 min, 30 min, 35 min, or 40 min. Certainly, the preset sleep duration threshold may alternatively be another value that may be selected according to a requirement.

Further, in this application, after charging control is performed, the method may further include: The mobile phone 100 re-determines the charging behavior information. If the re-determined charging behavior information is different from the previously determined charging behavior information, the mobile phone 100 determines a new charging control policy, and performs charging according to the new charging control policy.

In an implementation of this application, the mobile phone 100 may re-determine the charging behavior information based on a preset determining period. The preset determining period may be 30 min, 35 min, or the like, and may be selected according to a requirement.

In another implementation of this application, in a process of performing charging control, after charging control is interrupted, if the mobile phone 100 determines, based on the sleep state of the user, that charging control needs to be performed, the mobile phone 100 may re-determine the charging behavior information.

FIG. 7A-1 and FIG. 7A-2 provide a charging management method. Compared with the charging management method shown in FIG. 4, after charging control is performed, the method may further include: The mobile phone 100 periodically determines whether the user is continuously in the sleep state. If the user is continuously in the sleep state, charging control is performed according to the re-determined charging control policy; or if the user is in the non-sleep state, charging control ends and charging control is not performed.

After S60, the charging management method further includes:

S80: In a control process, the mobile phone 100 determines, based on user status determining information, whether the user is in the sleep state. If the user is in the sleep state, S90 is performed; or if the user is not in the sleep state, S70 is performed.

It should be noted that, in this case, in S70, charging control stops and charging continues.

S90: The mobile phone 100 re-determines the charging behavior information, re-determines the charging control policy based on the re-determined charging behavior information, and performs charging according to the newly determined charging control policy.

S100: The mobile phone 100 determines whether the mobile phone 100 is fully charged or unplugged. If the mobile phone 100 is fully charged or unplugged, S 110 is performed; or if the mobile phone 100 is not fully charged or unplugged, S80 is performed, to determine, based on a determining period, whether the user is in the sleep state.

S110: End charging.

In the charging management method, after S40, the method may further include: The mobile phone 100 periodically and regularly obtains the foregoing user status information used to determine the sleep state of the user, so that in S80 the mobile phone 100 periodically determines whether the user is in the sleep state. The obtaining period may be 30 min. Certainly, the obtaining period may alternatively be another value.

FIG. 7B-1 and FIG. 7B-2 provide a charging management method. Compared with the charging management method shown in FIG. 4, the method includes: after the step S40, if the battery power reaches the preset power threshold, S41 is performed; or if the battery power does not reach the preset power threshold, S70 is performed.

S41: The mobile phone 100 periodically obtains local data of the mobile phone 100 and data from the device 200.

S51: In a control process, the mobile phone 100 periodically determines, based on user status determining information, whether the user is in the sleep state. If the user is in the sleep state, S61 is performed; or if the user is not in the sleep state, S71 is performed.

S61: If the mobile phone 100 determines the sleep state of the user for the first time, the mobile phone 100 determines the charging behavior information, determines a charging control policy based on the determined charging behavior information, and performs charging according to the charging control policy. If the mobile phone 100 determines the sleep state of the user for an $N^{th}$ time ($N \geq 2$), the mobile phone 100 re-determines the charging behavior information, re-determines the charging control policy based on the re-determined charging behavior information, and performs charging based on the re-determined charging control policy.

S71: If the mobile phone 100 determines the sleep state of the user for the first time, in S71, charging control is not performed. If the mobile phone 100 determines the sleep state of the user for an $N^{th}$ time ($N \geq 2$), in S71, charging control stops and charging continues.

S80: The mobile phone 100 determines whether the mobile phone 100 is fully charged or unplugged. If the mobile phone 100 is fully charged or unplugged, S90 is performed; or if the mobile phone 100 is not fully charged or powered off, S41 is performed.

S90: End charging.

Further, in this application, the mobile phone 100 may stop re-determining the charging behavior information when the mobile phone 100 is unplugged or the battery power of the mobile phone 100 reaches a preset control stop threshold. A power value of the control stop threshold may range from 95% to 100%, for example, 95%, 98%, or 100%. Certainly, the control stop threshold may alternatively be another value that may be selected according to a requirement.

It should be noted that in this application, the mobile phone 100 may further determine the sleep state of the user based on the foregoing charging information, sensor information, and the like. Details are not described herein again.

In addition, in this application, the mobile phone 100 includes a plurality of timers. Based on the plurality of timers, the foregoing processing of data obtaining that needs to be performed periodically can be implemented, for example, obtaining, based on the preset obtaining period, the user status information used to determine the sleep state of the user; obtaining, based on the preset obtaining period in the charging process, the charging behavior prediction information used to determine the charging behavior information of the mobile phone 100; and re-determining the charging behavior information based on the preset determining period.

In addition, the plurality of timers may be started at a moment the battery power of the mobile phone 100 reaches the power threshold, or at another moment such as a moment at which the mobile phone 100 is connected to the charger 300, which may be selected according to a requirement.

Further, in this application, the power threshold may be determined by the mobile phone 100 based on the charging behavior prediction information used to determine the charging behavior information of the mobile phone 100 in this application. For example, if the mobile phone 100 determines, based on the charging behavior prediction information used to determine the charging behavior information of the mobile phone 40, that the battery power of the mobile phone 100 is usually 85% when the mobile phone 100 is unplugged, the sleep state of the user may be determined when the battery power is 80%.

In addition, time at which the battery power reaches the power threshold may be further determined based on the charging behavior prediction information used to determine the charging behavior information of the mobile phone 100, and power detection is enabled at the determined time at which the battery power reaches the power threshold. For example, if it is determined that time at which the battery power reaches 80% of the power threshold is 6:00, the mobile phone 100 starts to detect at 6:00 or detects, based on a detection period, whether the battery power reaches 80%.

As described above, in some implementations of this application, before the mobile phone 100 is charged according to the determined charging control policy, the mobile phone 100 may further determine, by determining whether the battery power of the mobile phone 100 reaches the preset power threshold and whether the user status is a preset control state, whether to perform charging control, that is, the mobile phone 100 determine, based on a power condition and a user status condition of the mobile phone 100, whether to perform charging control, and when determining to perform charging control, perform charging according to the determined charging control policy.

Further, in some other implementations of this application, the mobile phone 100 may determine, according to another charging control condition, whether to perform charging control. The charging control condition may further include charging time condition of the mobile phone 100, a charging location condition of the mobile phone 100, a connection status condition between the mobile phone 100 and a power supply, a power condition of an electronic device that supplies power to the mobile phone 100, and the like. The charging control condition may be set and selected according to a requirement.

The charging time condition of the mobile phone 100, for example, may be that charging control is performed when the mobile phone 100 is charged in a time period from 0:00 a.m. to 6:00 a.m., and charging control is not performed when the mobile phone 100 is charged in another time period.

The charging location condition of the mobile phone 100, for example, may be that charging control may be performed when the mobile phone 100 is charged at home, and charging control is not performed when the mobile phone 100 is charged in another place.

The connection status condition between the mobile phone 100 and the power supply, for example, may be that charging control is performed when the mobile phone 100 is connected to the power supply in a wired manner, charging control is performed when the mobile phone 100 is connected to the power supply in a wireless manner and a connection is stable; charging control is not performed when the mobile phone 100 is connected to the power supply in a wireless manner and a connection is unstable.

The power condition of the electronic device that supplies power to the mobile phone 100, for example, may be that another mobile phone may reversely charge the mobile phone 100. If a state of charge of the another mobile phone is lower than 20% of total power of the another mobile phone, the mobile phone 100 controls charging of the mobile phone 100; otherwise, charging control is not performed.

Certainly, after determining the charging control policy, the mobile phone 100 may determine, based on the another charging control condition, whether to perform charging control, or may directly perform charging based on the charging control policy as required.

Further, in this application, the mobile phone 100 may determine, based on a user selection and charging time, whether to perform the charging management method provided in this application.

For example, that the mobile phone 100 determines whether to perform the charging management method provided in this application to perform charging management may be: when the mobile phone 100 is connected to the power supply, the mobile phone 100 displays an interface shown in FIG. 8A on a screen of the mobile phone 100. The interface includes an "OK" control and a "Cancel" control that are used by the user to determine whether to enable the mobile phone 100 to perform charging management on the mobile phone 100 according to the charging management method provided in this application. If the mobile phone 100 detects a trigger operation performed by the user on the "OK" control, the mobile phone 100 performs the charging management method; or if the mobile phone 100 detects a trigger operation performed by the user on the "Cancel" control, the mobile phone 100 does not perform the charging management method.

It should be noted that each time the mobile phone 100 is connected to the power supply to perform charging, the mobile phone 100 may display the interface shown in FIG. 8A on the screen of the mobile phone 100, or the mobile phone 100 may display the interface shown in FIG. 8A on the screen of the mobile phone 100 at an interval of time period according to a preset display period, for example, may display the interface once a week or once a month. In addition, before the mobile phone 100 detects next time that the user re-determines whether to enable the mobile phone 100 to perform the charging management method to perform charging management, each time the mobile phone 100 is charged, the mobile phone 100 determines, based on a current selection of the user, whether to perform the charging management method to perform charging management.

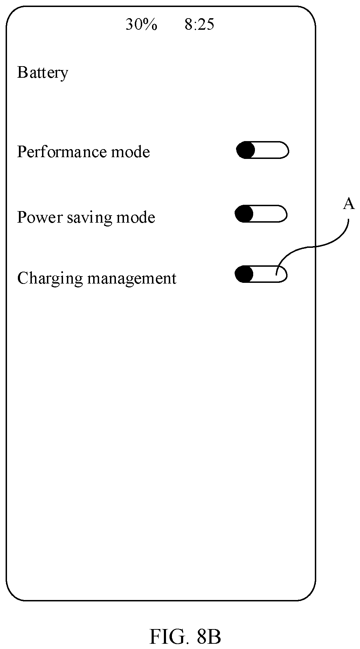

In addition, as shown in FIG. 8B, "Battery" settings of the mobile phone 100 may further include "charging management" and a corresponding switch control A. Therefore, that the mobile phone 100 determines whether to use the charging management method provided in this application to perform charging management may be: when the mobile phone 100 detects an enable operation performed by the user on the switch control A, the mobile phone 100 performs the charging management method. If the mobile phone 100 does not detect an enable operation performed by the user on the switch control A or the mobile phone 100 detects a disable operation performed by the user on the switch control A, the mobile phone 100 does not perform the charging management method. In addition, each time the mobile phone 100 is charged, the mobile phone 100 may determine, based on a user selection and user settings in the "battery" settings, whether charging control needs to be performed, and the mobile phone 100 does not need to re-detect a selection operation of the user each time.

In addition, the "Battery" settings may further include a performance mode, a power saving mode, a switch control corresponding to the performance mode, a switch control corresponding to the power saving mode, and the like shown in FIG. 8B, which may be selected according to a requirement.

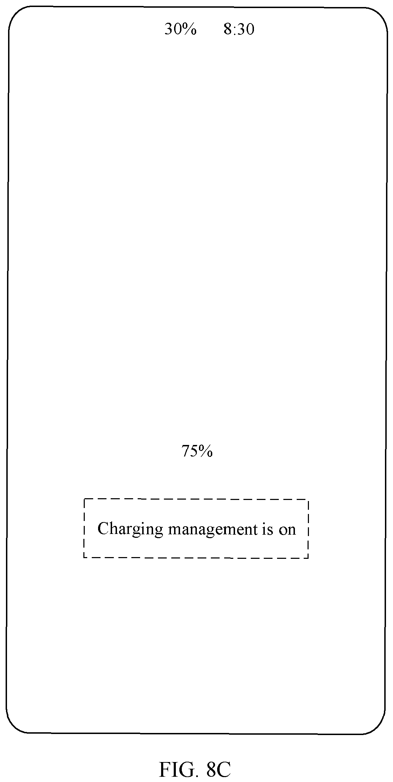

Further, when the mobile phone 100 is charged, the charging management method is performed to perform charging control on the mobile phone 100. In this case, prompt information used to prompt the user that the mobile phone 100 is performing charging control may be further displayed on the interface of the mobile phone 100, for example, a "Charging management is on" prompt box shown in FIG. 8C is displayed. In addition, current power, for example, 75%, may be further displayed.

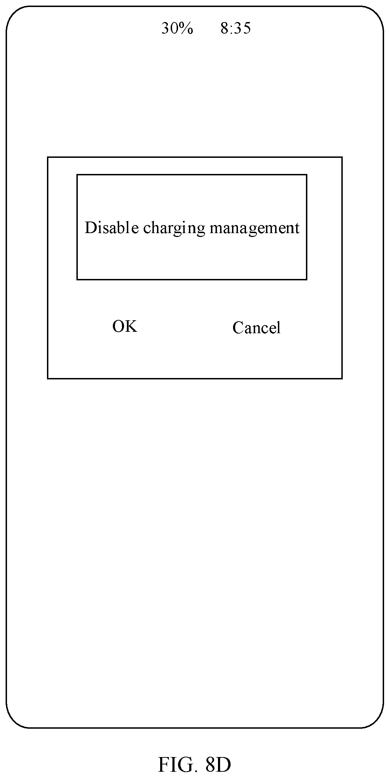

Further, if the mobile phone 100 detects a trigger operation performed by the user on the prompt information, the mobile phone 100 may further display an interface shown in FIG. 8D, so that the user selects whether to continue to use the charging management function provided in this application. For example, if the mobile phone 100 detects a trigger operation performed by the user on an "OK" control, the mobile phone 100 no longer performs the charging management method. If the mobile phone 100 detects a trigger operation performed by the user on a "Cancel" control, the mobile phone 100 continues to perform the charging management method.

Further, the mobile phone 100 may determine, based on charging time of the mobile phone 100, whether to perform the charging management method. For example, the mobile phone 100 performs the charging management method at 22:00 to 7:00, and does not perform the charging management method at 7:01 to 21:99. The charging time may be determined according to a selection of the user.

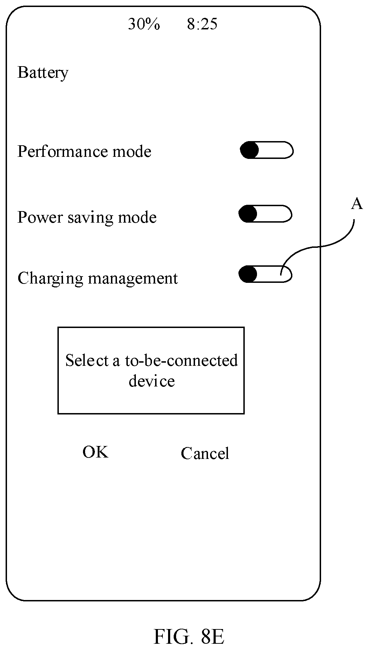

Further, in this application, if the mobile phone 100 detects the enable operation performed by the user on the switch control A corresponding to "Charging management" on the interface shown in FIG. 8B, the mobile phone 100 further includes an interface that further presents a "Select a to-be-connected device" control shown in FIG. 8E. The control is used by the user to select a device that interacts with the mobile phone 100, or used by the user to select a device by which the mobile phone 100 can obtain the charging behavior prediction information, that is, the control is used to prompt the user whether an interactive device is selected, to grant the mobile phone 100 permission to obtain information on a plurality of devices.

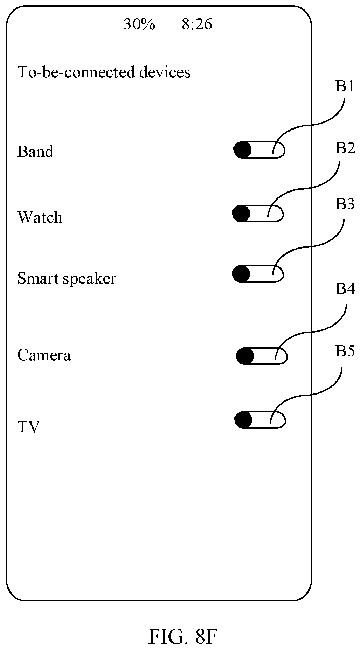

If the mobile phone 100 detects a trigger operation performed by the user on an "OK" control in FIG. 8E, the mobile phone 100 may further present, as shown in FIG. 8F, a display interface that displays names of a plurality of device and a selection control corresponding to each device, for example, the band 210, a selection control B1 corresponding to the band 210, the watch 220, a selection control B2 corresponding to the watch 220, the smart speaker 230, a selection control B3 corresponding to the smart speaker 230, a surveillance camera, a selection control B4 corresponding to the surveillance camera, a TV, a selection control B5 corresponding to the TV, and the like.

If the mobile phone 100 detects an enable operation performed by the user on the selection control B 1 corresponding to the band 210, the mobile phone 100 may obtain charging behavior prediction information collected by the band 210. If the mobile phone 100 detects that the selection control B5 corresponding to the TV is in a disabled state, the mobile phone 100 does not obtain charging behavior prediction information collected by the TV A manner of selecting another device by the mobile phone 100 is the same as a manner of selecting the band 210 and the TV Details are not described herein again.

In addition, it should be noted that, how the mobile phone 100 displays an interface shown in FIG. 8F may be: the mobile phone 100 displays the interface based on a user operation after FIG. 8E, or the mobile phone 100 displays the interface based on a user operation when a trigger operation performed by the user on a "Device connection" control under a "Settings" control of the mobile phone 100 is detected, which may be selected based on a requirement.

In use of the electronic device, the user usually charges the mobile phone 100 when the user is in sleep. In a charging management method in the conventional technology, only charging behavior of the user is considered during charging management, and therefore some circumstances exist: when the user is in the non-sleep state, the mobile phone 100 performs charging control, which causes the mobile phone 100 not to be fully charged quickly; and when the user is in the sleep state, charging control is not performed; as a result, the mobile phone 100 is in a float-charging state for a long time after the mobile phone 100 is quickly fully charged. The foregoing charging management solution has problems of improper charging management and affecting user experience.

In the charging management method provided in this application, the user status and a use of the mobile phone 100 by the user are considered, whether charging control needs to be performed is determined based on the user status such as the sleep state of the user, and the charging control policy is determined based on the determined charging behavior information to perform charging control. This avoids the foregoing problem in the conventional technology, improves user experience, and effectively protects the battery.

In addition, in this application, the mobile phone 100 determines the sleep state of the user and the charging behavior information by obtaining data from the mobile phone 100 and from a plurality of other electronic devices that communicate with the mobile phone 100, and performing joint data processing on the real-time and historical storage data. This is a multi-device collaborative intelligent charging control method. According to this method, the sleep state of the user can be accurately determined and charging behavior of the user can be more accurately determined, to more accurately perform charging management on the mobile phone 100, reduce float charging time, or ensure a charging rate, and improve user experience.

In addition, in this application, whether to perform charging control may be determined based on the sleep state of the user, or whether to perform charging control may be determined based on the exercise status of the user. For example, if the user is in the exercise state, charging control may be performed; or if the user is not in the exercise state, charging control may not be performed. Whether to perform charging control may be further determined according to whether the user uses another electronic device other than the mobile phone 100. For example, if the user is in a state of using a computer or watching TV, charging control may be performed; or if the user is not in a state of using a computer or watching TV, charging control may not be performed.

Certainly, whether to perform charging control may be further determined based on another user status.

In this application, the foregoing data/information fusion is machine learning and prediction, so that intelligence of the mobile phone 100 can be improved, and consequently user experience can be improved.

Further, refer to FIG. 9. In another implementation of this application, the charging management system further includes a server, and a server 400 may be a cloud server. The device 100 shares collected data (information) with the cloud server in a real-time or non-real-time manner, and the mobile phone 100 requests, from the cloud server, the data (information) shared by the device 200.

FIG. 10 is a schematic diagram of a structure of a SoC (System on Chip, system on chip) 1000 according to an implementation of this application. In FIG. 10, similar components have same reference numerals. In addition, a dashed-line box represents an optional feature of a more advanced SoC 1000. The SoC 1000 may be used in any electronic device according to this application, for example, the electronic device according to any embodiment of this application, and may implement corresponding functions based on different devices in which the SoC 1000 is located and different instructions stored in the SoC 1000.

In FIG. 10, the SoC 1000 includes an interconnection unit 1002 coupled to a processor 1001, a system agent unit 1006, a bus controller unit 1005, an integrated memory controller unit 1003, a group of coprocessors 1007 or one or more coprocessors 1007 that may include integrated graphics logic, an image processor, an audio processor, and a video processor, an SRAM (static random access memory) unit 1008, and a DMA (direct memory access) unit 1004. In an embodiment, the coprocessor 1007 includes a dedicated processor, for example, a network or communication processor, a compression engine, a GPGPU, a high throughput MIC processor, or an embedded processor.

The SRAM unit 1008 may include one or more computer-readable storage media, configured to store data and/or instructions. The computer-readable storage medium may store instructions, and specifically, store temporary and permanent copies of the instructions. The instructions may include instructions that enable an electronic device to implement the foregoing charging management method when being executed by at least one unit in the processor.

The embodiments of the mechanism disclosed in this application may be implemented in a manner such as software, hardware, firmware, or a combination of these implementation methods. The embodiments of this application may be implemented as a computer program or program code executed on a programmable system. The programmable program includes at least one processor and a memory (or a storage system, including volatile and nonvolatile memories and/or a storage unit).

The program code may be applied to input the instructions to perform the functions described herein and generate output information. The output information may be applied to one or more output devices in a known manner. It may be understood that, in the embodiments of this application, a processing system may be a microprocessor, a digital signal processor (DSP), a microcontroller, an application-specific integrated circuit (ASIC), or the like, and/or any combination thereof. According to another aspect, the processor may be a single-core processor, a multi-core processor, or the like, and/or any combination thereof.

The program code may be implemented in a high-level programming language or an object-oriented programming language, to communicate with the processor. The program code may also be implemented by using an assembly language or a machine language when needed. Indeed, the mechanisms described in this application are not limited to the scope of any particular programming language. In any case, the language may be a compiled language or an interpretive language.

In some cases, the disclosed embodiments may be implemented by hardware, firmware, software, or any other combinations. The disclosed embodiments may be implemented as instructions carried by or stored on one or more transitory or non-transitory machine-readable (for example, computer-readable) storage media. The instructions may be read and executed by one or more processors. For example, the instructions are distributed over a network or through a pneumatic computer-readable medium. Therefore, the machine-readable medium may include any mechanism for storing or transmitting information in a machine (for example, a computer) readable form, including, but not limited to, a floppy disk, a compact disc, an optical disc, a compact disc read-only memory (CD-ROM), a magneto-optical disc, a read-only memory (ROM), a random access memory (RAM), an erasable programmable read-only memory (EPROM), an electrically erasable programmable read-only memory (EEPROM), a magnetic card or an optical card, a flash memory, or a tangible machine-readable memory for transmitting information (for example, a carrier-wave, infrared, and digital signal) through the internet in an electrical, optical, acoustic, or another form. Therefore, the machine-readable medium includes any type of machine-readable medium suitable for storing or transmitting electronic instructions or information in a machine-readable form.

One or more aspects of at least one embodiment may be implemented by using representative instructions stored on a computer-readable storage medium. The instructions represent various logic in a processor, and when the instructions are read by a machine, the mechanism is enabled to act on the logic for performing the technologies described herein. These representations referred to as "IP cores" may be stored on a tangible computer-readable storage medium and provided to a plurality of customers or production devices for implementation to be loaded into a manufacturing machine that actually manufactures the logic or the processor.

In some cases, an instruction converter may be configured to transfer instructions from a source instruction set to a target instruction set. For example, the instruction converter may convert, in a transform (for example, a static binary transform, or a dynamic binary transform including dynamic compilation), morphing, emulation, or another manner, the instructions into one or more other instructions processed by a core. The instruction converter may be implemented by using software, hardware, firmware, or another combination. The instruction converter may be located on the processor, outside the processor, or partially on the processor and partially outside the processor.

It should be noted that, as used herein, the term "module" may refer to an application-specific integrated circuit (ASIC), an electronic circuit, a (shared, dedicated, or group) processor that executes one or more pieces of software or firmware programs and/or a memory, a combinational logic circuit, and/or another appropriate hardware component that provides the described functions, or may be used as a part of these hardware components. In other words, all modules in the device embodiments of this application are logical modules. Physically, one logical module may be a physical unit, or may be a part of a physical unit, or may be implemented by using a combination of a plurality of physical units. In addition, the device embodiments of this application do not introduce a module that is not closely related to resolving the technical problem in this application. This does not indicate that no other module exists in the foregoing device embodiments.

It should be noted that the terms "first", "second", and the like are merely used for distinction and descriptions, but cannot be understood as indicating or implying relative importance.

It should be noted that, in the accompanying drawings, some structural or method features may be shown in a particular arrangement and/or order. However, it should be understood that such a particular arrangement and/or order may not be required. In some embodiments, these features may be arranged in a manner and/or order different from that shown in the descriptive accompanying drawings. In addition, inclusion of the structural or method features in a particular figure does not imply that such features are required in all embodiments, and in some embodiments, these features may not be included or may be combined with other features.

Although this application has been illustrated and described with reference to some implementations of this application, a person of ordinary skill in the art should understand that the foregoing content is used to further describe in detail this application with reference to specific implementations, and these descriptions cannot be construed as a limitation on the specific embodiments of this application. A person skilled in the art may make various changes to the form and detail in this application, including making several simple deductions or substitutions, without departing from the spirit and scope of this application.

**Claims**

1. A charging management method, applied to an electronic device, and comprising:

    starting, by the electronic device, charging;
    determining, by the electronic device, charging behavior information;
    determining, by the electronic device, a charging control policy based on the charging behavior information; and
    performing, by the electronic device, charging according to the charging control policy.

2. The charging management method according to claim 1, wherein the charging behavior information is determined by the electronic device based on charging behavior prediction information from the electronic device and charging behavior prediction information from another electronic device other than the electronic device.

3. The charging management method according to claim 2, wherein the charging behavior prediction information comprises one or more of the following:

    sleep state information of a user;
    sleep time information of the user;
    exercise information of the user;
    vital sign information of the user;
    interaction status information between the electronic device and the another electronic device;
    charging information of the electronic device;
    sensor information of the electronic device;
    a charging date of the electronic device;
    a predetermined event on the electronic device; and
    a charging location of the electronic device.

4. The charging management method according to claim 3, wherein the charging information of the electronic device comprises one or more of the following:

    initial charging time of the electronic device;
    initial state of charge of the electronic device;
    charging duration of the electronic device; and
    end state of charge of the electronic device.

5. The charging management method according to any one of claims 1 to 4, wherein the determining, by the electronic device, a charging control policy based on the charging behavior information, and performing charging according to the charging control policy comprises:

    determining, by the electronic device, control intervention start time and control end time based on the charging behavior information; and
    stopping, by the electronic device, charging at the control intervention start time, and starting charging at the control end time.

6. The charging management method according to claim 5, wherein the charging behavior information comprises any one of the following:

    unplug time of the electronic device;
    the unplug time of the electronic device and battery power of the electronic device when unplugged;
    the control intervention start time and the control end time of the electronic device; and
    the control intervention start time, the control end time, and the unplug time of the electronic device.

7. The charging management method according to any one of claims 1 to 6, wherein the method further comprises:
if the electronic device determines to perform charging control, performing, by the electronic device, charging according to the charging control policy.

8. The charging management method according to claim 7, wherein if a preset charging control condition is met, the electronic device determines to perform charging control; and
the charging control condition comprises one or more of the following:

a power condition of the electronic device;
a charging time condition of the electronic device;
a charging location condition of the electronic device;
a connection status condition between the electronic device and a power supply;
a power condition of another electronic device that supplies power to the electronic device; and
a user status condition.

9. The charging management method according to claim 8, wherein the method further comprises: if the battery power of the electronic device reaches a preset charging control threshold, and a user status is a preset control state, it is considered that the preset charging control condition is met.

10. The charging management method according to claim 9, wherein the preset control state comprises that:

the user is in a light sleep state;
the user is in a deep sleep state; and
sleep duration of the user reaches a preset sleep duration threshold.

11. The charging management method according to claim 1, wherein the method further comprises:

displaying a charging management enabling control on an interface of the electronic device; and
if the electronic device detects an enable operation performed by the user on the charging management enabling control, obtaining, by the electronic device, charging behavior prediction information during charging; or
if the electronic device detects a disable operation performed by the user on the charging management enabling control, skipping obtaining, by the electronic device, charging behavior prediction information during charging.

12. The charging management method according to claim 1, wherein the method further comprises: if the electronic device determines to perform charging control, displaying, by the electronic device, prompt information used to remind a user that charging control has been performed.

13. The charging management method according to any one of claims 1 to 12, wherein the method further comprises:

re-determining the charging behavior information; and
if the re-determined charging behavior information is different from the previously determined charging behavior information, determining a new charging control policy, and performing charging control according to the new charging control policy.

14. The charging management method according to claim 13, wherein the re-determining the charging behavior information comprises:

re-determining the charging behavior information based on a preset determining period; or
in a process of performing charging control, after charging control is interrupted, if it is determined, based on the user status, that charging control needs to be performed, re-determining the charging behavior information.

15. The charging management method according to claim 14, wherein the method further comprises: stopping re-determining the charging behavior information when the electronic device is unplugged or the battery power reaches a preset control stop threshold.

16. The charging management method according to any one of claims 1 to 15, wherein the method further comprises:

displaying, on the interface of the electronic device, prompt information of another electronic device that is selected by the user to interact with the electronic device; and
if the electronic device detects a trigger operation performed by the user on the prompt information, displaying, by the electronic device, device information comprising another electronic device capable of interacting with the electronic device; or
if the electronic device receives a trigger operation performed by the user on the device information of the another electronic device, enabling, by the electronic device, interaction with the another electronic device.

17. A charging management system, comprising a first electronic device and at least one second electronic device that establishes communication with the first electronic device, wherein

the first electronic device starts charging; the first electronic device is configured to obtain first charging behavior prediction information; the second electronic device is configured to obtain second charging behavior prediction information, and send the second charging behavior prediction information to the second electronic device; and the first electronic device is configured to determine charging behavior information based on the first charging behavior prediction information and the second charging behavior prediction information, determine a charging control policy based on the charging behavior information, and perform charging according to the charging control policy.

18. The charging management system according to claim 17, wherein the first electronic device is further configured to: when the first electronic device determines to perform charging control, perform charging according to the charging control policy.

19. An electronic device, comprising:

a memory, configured to store a computer program, wherein the computer program comprises program instructions; and a processor, configured to execute the program instructions, so that the electronic device performs the charging management method according to any one of claims 1 to 16.

20. A computer-readable storage medium, wherein the computer-readable storage medium stores a computer program, the computer program comprises program instructions, and when the program instructions are run by a computer, an electronic device is enabled to perform the charging management method according to any one of claims 1 to 16.

FIG. 1

FIG. 2

S10

A mobile phone 100 is connected to a charger 300 to perform charging

S21

The mobile phone 100 obtains local data from the mobile phone 100

S22

The mobile phone 100 obtains data from a device 200

S30

The mobile phone 100 performs feature fusion to obtain charging behavior information

S40

Determine whether power reaches a preset power threshold

No

Yes

S50

Determine whether a user is in a sleep state

Yes

S60

S70

Do not perform charging control

No

Determine a charging control policy based on the charging behavior information, to perform charging

End charging

FIG. 3

Mobile phone
100

Charging management module
140

Data obtaining module

S121

S122

Data collection module

Band
210

FIG. 4

A mobile phone 100 is connected to a charger 300 to perform charging — S10

S21 — The mobile phone 100 obtains local data from the mobile phone 100

S22 — The mobile phone 100 obtains data from a device 200

The mobile phone 100 performs feature fusion to obtain charging behavior information — S30

Determine whether power reaches a preset power threshold — S40

No

Yes

Determine a current sleep state of a user — S51

Deep sleep state

Light sleep state or non-sleep state

S70 — Do not perform charging control

S60 — Determine a charging control policy based on the charging behavior information, to perform charging

End charging

FIG. 5

FIG. 6

A mobile phone 100 is connected to a charger 300 to perform charging — S10

The mobile phone 100 obtains local data from the mobile phone 100 — S21

The mobile phone 100 obtains data from a device 200 — S22

The mobile phone 100 performs feature fusion to obtain charging behavior information — S30

Determine whether power reaches a preset power threshold — S40

No

Yes

Determine whether a user is in a sleep state — S50

Yes

TO
FIG. 7A-2

TO
FIG. 7A-2

TO
FIG. 7A-2

FIG. 7A-1

CONT.
FROM
FIG. 7A-1

CONT.
FROM
FIG. 7A-1

CONT.
FROM
FIG. 7A-1

S70

S60

Do not perform
charging control

No

Determine a charging control policy
based on the charging behavior
information, to perform charging

S80

No

Determine whether the
user is in the sleep state

Yes

S90

No

Re-determine charging behavior information,
and determine a charging control policy based
on the re-determined charging behavior
information, to perform charging

S100

Determine whether
the mobile phone 100 is fully
charged or unplugged

Yes

S110

End charging

FIG. 7A-2

29

A mobile phone 100 is connected to a charger 300 to perform charging ⌐ S10

The mobile phone 100 obtains local data from the mobile phone 100 ⌐ S21

The mobile phone 100 obtains data from a device 200 ⌐ S22

The mobile phone 100 performs feature fusion to obtain charging behavior information ⌐ S30

Determine whether power reaches a preset power threshold ⌐ S40

No

TO
FIG. 7B-2

TO
FIG. 7B-2

FIG. 7B-1

CONT.
FROM
FIG. 7B-1

CONT.
FROM
FIG. 7B-1

Yes

S41

The mobile phone 100 periodically obtains the local data from the mobile phone 100 and the data from the device 200

S51

No ← Determine whether a user is in a sleep state

Yes

S70

Do not perform charging control

S71

Do not perform charging control (stop charging control and continue charging)

S61

Determine a charging control policy based on the (re)determined charging behavior information to perform charging

S80

Determine whether the mobile phone 100 is fully charged or unplugged

No

Yes

S90

End charging

FIG. 7B-2

30%    8:25

Enable charging management

OK          Cancel

FIG. 8A

30%    8:25

Battery

Performance mode ⬤▬

Power saving mode ⬤▬

A

Charging management ⬤▬

FIG. 8B

30%     8:30

75%

Charging management is on

FIG. 8C

30%     8:35

Disable charging management

OK          Cancel

FIG. 8D

30%     8:25

Battery

Performance mode

Power saving mode                                          A

Charging management

Select a to-be-connected
device

OK          Cancel

FIG. 8E

30%    8:26

To-be-connected devices

Band

Watch

Smart speaker

Camera

TV

B1

B2

B3

B4

B5

FIG. 8F

FIG. 9

System on chip
1000

Coprocessor
1007

Processor
1001

Bus controller unit
1005

SRAM unit
1008

Interconnection unit
1002

System agent
unit 1006

Integrated memory
controller unit 1003

DMA unit
1004

FIG. 10

## INTERNATIONAL SEARCH REPORT

| International application No. |
| --- |
| **PCT/CN2021/098166** |

**A. CLASSIFICATION OF SUBJECT MATTER**

H02J 7/00(2006.01)i

According to International Patent Classification (IPC) or to both national classification and IPC

**B. FIELDS SEARCHED**

Minimum documentation searched (classification system followed by classification symbols)

H02J, H01M

Documentation searched other than minimum documentation to the extent that such documents are included in the fields searched

Electronic data base consulted during the international search (name of data base and, where practicable, search terms used)

DWPI, SIPOABS, CNABS, CNTXT, CNKI: 充电, 睡眠, 预测, 估计, 拔电, 断电, 停止充电, 时间, 管控; charge, sleep, dormant, forecast, estimate, unplug, stop, end, time, control, limit

**C. DOCUMENTS CONSIDERED TO BE RELEVANT**

| Category* | Citation of document, with indication, where appropriate, of the relevant passages | Relevant to claim No. |
| --- | --- | --- |
| X | WO 2019146917 A1 (SAMSUNG ELECTRONICS CO., LTD.) 01 August 2019 (2019-08-01) description, paragraphs 26-92, 125-144, figures 1-10 | 1-20 |
| X | CN 109888867 A (VIVO COMMUNICATION TECHNOLOGY CO., LTD.) 14 June 2019 (2019-06-14) description, paragraphs 28-241, and figures 1-8 | 1-4, 7-20 |
| Y | CN 109888867 A (VIVO COMMUNICATION TECHNOLOGY CO., LTD.) 14 June 2019 (2019-06-14) description, paragraphs 28-241, and figures 1-8 | 5-6 |
| Y | CN 104378497 A (LG ELECTRONICS INC.) 25 February 2015 (2015-02-25) description, paragraphs 94-154, and figures 1-18 | 5-6 |
| A | CN 106664336 A (HUAWEI TECHNOLOGIES CO., LTD.) 10 May 2017 (2017-05-10) entire document | 1-20 |
| A | CN 108618278 A (GWN (TIANJIN) PRECISION ELECTRONIC CO., LTD.) 09 October 2018 (2018-10-09) entire document | 1-20 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **04 August 2021** | **25 August 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/098166**

| Patent document cited in search report | | | Publication date (day/month/year) | Patent family member(s) | | | Publication date (day/month/year) |
|---|---|---|---|---|---|---|---|
| WO | 2019146917 | A1 | 01 August 2019 | US | 2019229547 | A1 | 25 July 2019 |
| | | | | EP | 3518380 | A1 | 31 July 2019 |
| | | | | KR | 20190090474 | A | 02 August 2019 |
| | | | | CN | 111433999 | A | 17 July 2020 |
| | | | | IN | 202017027096 | A | 02 October 2020 |
| CN | 109888867 | A | 14 June 2019 | CN | 109888867 | B | 08 January 2021 |
| CN | 104378497 | A | 25 February 2015 | EP | 2843793 | B1 | 25 October 2017 |
| | | | | EP | 2843793 | A2 | 04 March 2015 |
| | | | | EP | 2843793 | A3 | 22 April 2015 |
| | | | | US | 9531201 | B2 | 27 December 2016 |
| | | | | KR | 20150019295 | A | 25 February 2015 |
| | | | | US | 2015048803 | A1 | 19 February 2015 |
| | | | | KR | 2108063 | B1 | 08 May 2020 |
| CN | 106664336 | A | 10 May 2017 | CN | 106664336 | B | 31 January 2020 |
| | | | | WO | 2016179809 | A1 | 17 November 2016 |
| | | | | CN | 111479009 | A | 31 July 2020 |
| CN | 108618278 | A | 09 October 2018 | None | | | |

Form PCT/ISA/210 (patent family annex) (January 2015)

**EP 4 145 666 A1**

## REFERENCES CITED IN THE DESCRIPTION

**Patent documents cited in the description**

- CN 202010507697